(19)

Europäisches
Patentamt
European
Patent Office
Office européen
des brevets

(11) **EP 2 444 868 A1**

(12) **EUROPEAN PATENT APPLICATION**
published in accordance with Art. 153(4) EPC

(43) Date of publication:
**25.04.2012 Bulletin 2012/17**

(21) Application number: **10789201.0**

(22) Date of filing: **14.06.2010**

(51) Int Cl.:
***G05B 19/418*** (2006.01)      ***G06Q 50/00*** (2012.01)

(86) International application number:
**PCT/JP2010/003917**

(87) International publication number:
**WO 2010/146819 (23.12.2010 Gazette 2010/51)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.06.2009  JP 2009144887
21.01.2010  JP 2010010573**

(71) Applicant: **Hitachi, Ltd.
Chiyoda-ku
Tokyo 100-8280 (JP)**

(72) Inventors:
• **HOSODA, Junko
Yokohama-shi
Kanagawa 244-0817 (JP)**

• **FUKUSHIMA, Satoshi
Yokohama-shi
Kanagawa 244-0817 (JP)**
• **TATEISHI, Jun
Yokohama-shi
Kanagawa 244-0817 (JP)**

(74) Representative: **Calderbank, Thomas Roger et al
Mewburn Ellis LLP
33 Gutter Lane
London
EC2V 8AS (GB)**

(54) **COMPONENT ORDER QUANTITY DETERMINATION DEVICE AND COMPONENT ORDER QUANTITY DETERMINATION PROGRAM**

(57)      The present invention is provided to calculate order quantity of each part, at which an out-of-stock rate of each product does not exceed the allowable out-of-stock rate.

The part order quantity determination device has an input unit receiving an input such as an allowable out-of-stock rate of each product, a product-by-product information storage unit storing the allowable out-of-stock rate of each product, a part configuration information storage unit storing constituent parts of each product and the number of parts, a product-by-product demand quantity storage unit storing a demand quantity distribution product by product, a part-by-part order information storage unit storing an order quantity of each part, a part-by-part order information calculation unit virtually calculating a demand quantity in each calculation period from the demand quantity distribution of each product, calculating a necessary quantity of constituent parts by multiplying the calculated demand quantity with the number of constituent parts, calculating an order quantity from an order quantity distribution of each part, calculating an out-of-stock rate of each product from the difference between the calculated order quantity and the necessary quantity, in the case where the out-of-stock rate of each product exceeds the allowable out-of-stock rate, by changing the allowable out-of-stock rate of each part, calculating an out-of-stock rate of each part at which the out-of-stock rate of each product does not exceed the allowable out-of-stock rate, and determining the order quantity, and a display unit displaying the order quantity of each part.

FIG. 1

EP 2 444 868 A1

**Description**

Technical Field

The present invention relates to a part order quantity determination device and a part order quantity determination program for calculating a part order quantity at which the rate of product out-of-stock caused by fluctuations in demand of a product does not exceed an allowable out-of-stock rate and the value of a management index such as sales, profit, or part order amount designated by the user is best in a part ordering operation in make-to-stock production.

Background Art

In make-to-stock production of predicting demand, ordering parts, and manufacturing products, when the demand exceeds predicted quantity at a time point the products are actually sold, the products run out. Generally, to prevent sales opportunity loss due to out-of-stock of the products, a method of determining production quantity of products by adding safety stock quantity to demand prediction quantity is employed. However, by excessively estimating the safety stock quantity, a problem occurs such that the products remain unsold and are discarded. Consequently, a method of calculating the safety stock quantity as small as possible while allowing out-of-stock of products in an allowable range from the viewpoint of management is demanded. Patent literature 1 discloses a method of obtaining minimum product safety stock quantity satisfying an allowable product out-of-stock rate.

In recent years, however, the number of companies holding safety stock as parts due to increase in the kinds of products and standardization of parts is increasing. When the safety stock is held by parts, with respect to parts used in plural kinds of products, by predicting cancellation-out of fluctuations in demand among products to be used, the allowable out-of-stock rate can be achieved by the quantity of parts smaller than that necessary to hold the safety stock by products. Patent literature 2 discloses a method of obtaining the minimum part safety stock quantity satisfying the allowable part out-of-stock rate by using cancellation-out of fluctuations in demand among products used.

Citation List

Patent Literature

Patent literature 1: Japanese Patent Application Laid-Open Publication No. 2005-309770
Patent literature 2: Japanese Patent Application Laid-Open Publication No. 2007-128225

Summary of Invention

Technical Problem

In the patent literature 2, the minimum part safety stock quantity at which the out-of-stock rate of parts does not exceed the allowable value is obtained. However, in companies, as information for determining the break-even point, sales opportunity loss caused by out-of-stock of products and disposal risk caused by unsold products are used. That is, an index to be controlled by the companies is not the out-of-stock rate of parts but is the out-of-stock rate of products. Consequently, the part order quantity has to be calculated so that the out-of-stock rate of products does not exceed the allowable value. However, it is difficult to obtain the out-of-stock rate of products from the out-of-stock rate of parts for the following reasons.

A product is made of plural parts. Even one of the parts is short, the product becomes out of stock. The period in which parts are short in a period of manufacturing products differs among parts. The period in which parts are short is influenced by not only information of the parts such as the average value and the standard deviation of a part order quantity distribution used for obtaining safety stock quantity, the allowable out-of-stock rate, and the like but also information of a product using the part such as the average value and the standard deviation of a demand quantity distribution and the allowable out-of-stock rate. As described above, the period in which parts are short is related to various factors and the relation is not clear. Consequently, it is difficult to determine the allowable out-of-stock rate of products and calculate the out-of-stock rate of parts.

The present invention has been achieved in consideration of the above-described problems and an object is to calculate the part order quantity at which the out-of-stock rate of products does not exceed the allowable value. Indices to be considered by companies from the viewpoint of management (called management indices here) include not only the out-of-stock rate of products but also profit, cost, sales, cash flow, and the like. In the present invention, the part order quantity at which a management index designated by the user is best is calculated in the range where the out-of-stock rate of products does not exceed the allowable value.

Solution to Problem

A part order quantity determination device which solves the problem is for calculating order quantity of each part so that an out-of-stock rate of each product is closest to an allowable out-of-stock rate without exceeding the allowable out-of-stock rate, and includes:

an input unit receiving initial information entered by a user and storing it into a storage unit;
a first storage unit storing an allowable out-of-stock rate of each product;
a second storage unit storing constituent parts of each product and the number of the parts;
a third storage unit storing an average value and a standard deviation of a demand quantity distribution of each product;
a fourth storage unit storing an average value and a standard deviation of an order quantity distribution of each part and an initial out-of-stock rate;
a fifth storage unit storing a calculation period, a maximum value and a change interval of an out-of-stock rate to be calculated, and a standard normal distribution table;
a part-by-part order information calculation unit calculating a demand quantity in each calculation period product by product from the average value and the standard deviation of the demand quantity distribution,
calculating an initial order quantity part by part from the average value and the standard deviation of the order quantity distribution and the initial out-of-stock rate,
calculating a necessary quantity in each calculation period part by part by multiplying the calculated demand quantity in each calculation period product by product with the number of constituent parts,
calculating an initial excessive/insufficient quantity by subtracting the necessary quantity from the initial order in each calculation period part by part and calculating an initial out-of-stock rate on all of parts,
calculating the initial out-of-stock rate of each product on the basis of the initial excessive/insufficient quantity in each calculation period of each of parts used in each of products,
setting an out-of-stock rate to be calculated for each part step by step, calculating an out-of-stock rate for each product as the initial out-of-stock rate for the other parts, and subtracting the initial out-of-stock rate of each product, thereby calculating a product out-of-stock rate increase/decrease amount at each out-of-stock rate to be calculated part by part,
generating a first constraint formula of the allowable out-of-stock rate of each product and the out-of-stock rate of each product, a second constraint formula of the out-of-stock rate of each product, the initial out-of-stock rate of each product, an increase/decrease amount of the product out-of-stock rate at each out-of-stock rate to be calculated part by part, and an out-of-stock rate flag, a third constraint formula on the out-of-stock rate flag, and an objective function which minimizes sum of a difference obtained by subtracting the out-of-stock rate from the allowable out-of-stock rate of each product,
calculating a proper out-of-stock rate of each part by executing optimization calculation on the objective function,
and calculating an order quantity part by part from the average value and the standard deviation of the order quantity distribution of the part and the proper out-of-stock rate of each part; and
a display unit displaying the order quantity of each part.

A part order quantity determination program which solves the problem is for making a computer realize a function of calculating order quantity of each part so that an out-of-stock rate of each product is closest to an allowable out-of-stock rate without exceeding the allowable out-of-stock rate, wherein
an input unit receives, as initial information entered by a user, an allowable out-of-stock rate of each product, constituent parts of each product and the number of the parts, an average value and a standard deviation of a demand quantity distribution of each product, an average value and a standard deviation of an order quantity distribution of each part, an initial out-of-stock rate, a calculation period, a maximum value and a change interval of an out-of-stock rate to be calculated, and a standard normal distribution table, and stores them into storage units,
a calculation unit calculates a demand quantity in each calculation period product by product from the average value and the standard deviation of the demand quantity distribution,
calculates an initial order quantity part by part from the average value and the standard deviation of the order quantity distribution and the initial out-of-stock rate,
calculates a necessary quantity in each calculation period part by part by multiplying the calculated demand quantity in each calculation period product by product with the number of constituent parts,
calculates an initial excessive/insufficient quantity by subtracting the necessary quantity from the initial order in each calculation period part by part and calculates an initial out-of-stock rate on all of parts,

calculates the initial out-of-stock rate of each product on the basis of the initial excessive/insufficient quantity in each calculation period of each of parts used in each of products,

sets an out-of-stock rate to be calculated for each part step by step, calculates an out-of-stock rate for each product as the initial out-of-stock rate for the other parts, and subtracts the initial out-of-stock rate of each product, thereby calculating a product out-of-stock rate increase/decrease amount at each out-of-stock rate to be calculated part by part,

generates a first constraint formula of the allowable out-of-stock rate of each product and the out-of-stock rate of each product, a second constraint formula of the out-of-stock rate of each product, the initial out-of-stock rate of each product, an increase/decrease amount of the product out-of-stock rate at each out-of-stock rate to be calculated part by part, and an out-of-stock rate flag, a third constraint formula on the out-of-stock rate flag, and an objective function which minimizes sum of a difference obtained by subtracting the out-of-stock rate from the allowable out-of-stock rate of each product, calculates a proper out-of-stock rate of each part by executing optimization calculation on the objective function, and calculates an order quantity part by part from the average value and the standard deviation of the order quantity distribution of the part and the proper out-of-stock rate of each part, and

a display unit makes the computer execute each procedure of displaying the order quantity of each part.

Advantageous Effects of Invention

According to the present invention, by calculating the order quantity of parts at which the out-of-stock rate of products does not exceed the allowable value, the risks of the sales opportunity loss due to the out-of-stock of products and dead stock of parts due to unsold products are reduced, and the value of a management index designated by the user can be improved.

Brief Description of Drawings

FIG. 1 is a block diagram illustrating a functional configuration of a part order quantity determination device 100 according to an embodiment of the present invention.

FIG. 2 is a block diagram illustrating a hardware configuration example of the part order quantity determination device 100.

FIG. 3 is a diagram illustrating an example of a part configuration of a product.

FIGS. 4(a) and 4(b) are diagrams illustrating a demand quantity distribution by products and an allowable out-of-stock rate by products, respectively.

FIGS. 5(a) and 5(b) are diagrams illustrating a part order quantity distribution and an initial out-of-stock rate, respectively.

FIGS. 6(a), 6(b), and 6(c) are diagrams illustrating a calculation period, a maximum value and a change interval of an out-of-stock rate to be calculated, and a standard normal distribution table, respectively.

FIG. 7 is a diagram illustrating an example of a start screen of a part order quantity determination device displayed in a display unit 151.

FIG. 8 is a flowchart showing the flow of a part order quantity determining process in the first embodiment.

FIGS. 9(a) to 9(d) are diagrams illustrating examples of text files received by an input unit 150.

FIGS. 10(a) to 10(d) are diagrams illustrating examples of text files received by the input unit 150.

FIG. 11 is a flowchart showing the flow of process of calculating a demand quantity in each calculation period by products.

FIGS. 12(a) to 12(c) are diagrams illustrating information extracted or calculated in a demand quantity calculating process for a product A.

FIG. 13 is a flowchart showing the flow of an initial quantity order calculating process of a part.

FIGS. 14(a) to 14(d) are diagrams illustrating information extracted or calculated in the initial order quantity calculating process of a part "p".

FIG. 15 is a flowchart showing the flow of process of calculating a necessary quantity in each calculation period by parts.

FIGS. 16(a) to 16(c) are diagrams illustrating information extracted or calculated in a necessary quantity calculating process in each calculation period of the part "p".

FIG. 17 is a flowchart showing the flow of initial out-of-stock rate calculating process by parts.

FIG. 18 is a diagram illustrating initial excessive/insufficient quantity information of the part "p".

FIG. 19 is a flowchart showing the flow of initial out-of-stock rate calculating process by products.

FIGS. 20(a) to 20(c) are diagrams illustrating information extracted or calculated in an initial out-of-stock rate calculating process of a product "A".

FIG. 21 is a flowchart showing the flow of process of calculating a product out-of-stock rate of each out-of-stock rate to be calculated by parts.

FIGS. 22(a) and 22(b) are diagrams illustrating information extracted by the process of calculating the product out-of-stock rate of each out-of-stock rate to be calculated by parts.

FIGS. 23(a) and 23(b)are diagrams illustrating information calculated by the process of calculating the product out-of-stock rate of each out-of-stock rate to be calculated by parts.

FIGS. 24(a) to 24(c) are diagrams illustrating sets used in a proper out-of-stock rate calculating process.

FIGS. 25(a) and 25(b) are diagrams illustrating constants used in the proper out-of-stock rate calculating process.

FIG. 26 is a flowchart showing the flow of the proper out-of-stock rate calculating process.

FIGS. 27(a) and 27(b) are diagrams illustrating the out-of-stock rates of the part and the product calculated by the proper out-of-stock rate calculating process in the first embodiment.

FIG. 28 is a diagram illustrating order quantity of parts calculated by the part order quantity calculating process in the first embodiment.

FIG. 29 is a diagram showing an example of the part order quantity displayed in a display unit 151.

FIG. 30 is a block diagram illustrating a functional configuration of a part order quantity determination device 1000 according to a second embodiment of the present invention.

FIG. 31 is a diagram showing selling price and manufacture cost by products.

FIG. 32 is a diagram showing purchase cost by parts.

FIG. 33 is a diagram showing a start screen example of a part order quantity determination device displayed in a display unit 155.

FIG. 34 is a flowchart showing the flow of part order quantity determining process in the second embodiment.

FIG. 35 is a flowchart showing the flow of process of reading information in an input unit 150.

FIGS. 36(a) and 36(b) are diagrams illustrating example of text files received by the input unit 150.

FIGS. 37(a) and 37(b) are diagrams illustrating out-of-stock rates of parts and products calculated by proper out-of-stock rate calculating process in the second embodiment.

FIG. 38 is a diagram illustrating part order quantity and order amount calculated by the proper out-of-stock rate calculating process in the first embodiment.

FIG. 39 is a diagram illustrating an example of part order quantity, order amount, product out-of-stock rate, and values of management indices displayed in the display unit 155.

Description of Embodiments

Embodiments of the present invention will be described below with reference to the drawings.

First Embodiment

In a first embodiment of the present invention, without entry of a management index by the user, a part order quantity at which a product-by-product out-of-stock rate is closest to an allowable out-of-stock rate is calculated.

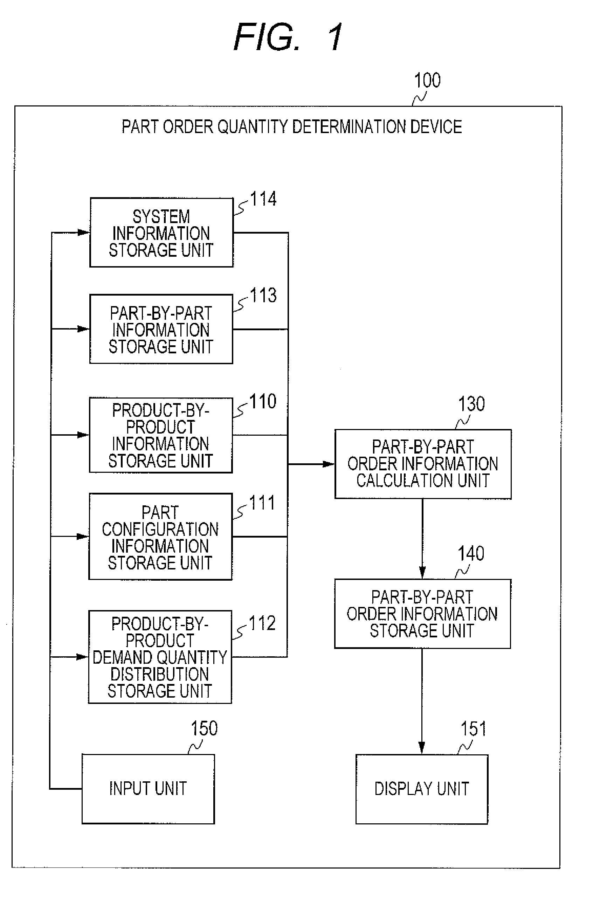

FIG. 1 is a block diagram illustrating a functional configuration of a part order quantity determination device 100 according to an embodiment of the present invention. As illustrated in the diagram, the part order quantity determination device 100 has a product-by-product information storage unit 110, a part configuration information storage unit 111, a product-by-product demand quantity distribution storage unit 112, a part-by-part information storage unit 113, a system information storage unit 114, a part-by-part order information calculation unit 130, a part-by-part order information storage unit 140, an input unit 150, and a display unit 151.

The input unit 150 performs processes of receiving the allowable out-of-stock rate by products, selling price and manufacture cost by products, constituent parts and the number of the parts by products, demand quantity distribution information by products, order quantity distribution information by parts, initial out-of-stock rate by parts, purchase cost by parts, calculation period, maximum value and change period of the out-of-stock rate to be calculated, and a probability distribution table. In the embodiment, it is assumed that the demand quantity distribution by products and the order quantity distribution by parts are according to normal distributions. As the demand quantity distribution information by products, the average value and standard deviation of the demand quantity distribution by products are received. As the order quantity distribution information by parts, the average value and standard deviation of the order quantity distribution by parts are received. As the probability distribution table, the standard normal distribution table is received.

The input unit 150 stores the received allowable out-of-stock rate, selling price, and manufacture cost by products into the product-by-product information storage unit 110. The input unit 150 stores the received constituent parts and the number of the parts by products into the part configuration information storage unit 111. The input unit 150 stores the received average value and the standard deviation of the demand quantity distribution by products in the product-by-product demand quantity distribution storage unit 112. The input unit 150 stores the received average value, standard deviation of the order quantity distribution by parts, initial out-of-stock rate, and purchase cost to the part-by-part information storage unit 113. The input unit 150 stores the calculation period, the maximum out-of-stock rate to be calculated, the change interval, and the standard normal distribution table in the system information storage unit 114.

In the product-by-product information storage unit 110, the allowable out-of-stock rate, the selling price, and the manufacture cost of each product received by the input unit 150 are stored.

In the part configuration information storage unit 111, the constituent parts and the number of the parts of each product received by the input unit 150 are stored.

In the product-by-product demand quantity distribution storage unit 112, the average value and the standard deviation of the demand quantity distribution of each product received by the input unit 150 are stored.

In the part-by-part information storage unit 113, the average value and the standard deviation of the order quantity distribution, the initial out-of-stock rate, and the purchase cost of each part received by the input unit 150 are stored.

In the system information storage unit 114, the calculation period, the maximum value and the change interval of the out-of-stock rate to be calculated, and the standard normal distribution table received by the input unit 150 are stored.

The part-by-part order information calculation unit 130 calculates the order quantity of each part which is the minimum in the range the out-of-stock rate of each product does not exceed the allowable value.

Concretely, for each product, the part-by-part order information calculation unit 130 extracts the average value and the standard deviation of the demand quantity distribution of the product from the product-by-product demand quantity distribution storage unit 112 and extracts the allowable out-of-stock rate of the product from the product-by-product information storage unit 110. The part-by-part order information calculation unit 130 extracts the average value and the standard deviation of the order quantity distribution and the initial out-of-stock rate of each part from the part-by-part information storage unit 113, and extracts the calculation period and the maximum value and the change interval of the out-of-stock rate to be calculated from the system information storage unit 114.

According to the average value and the standard deviation of the demand quantity distribution of each product, the part-by-part order information unit 130 falsely calculates the demand quantity of the product in each of the calculation periods, and stores combinations each made of the product, the calculation period, and the demand quantity. Specifically, a random number is generated from 0 to 1 in each period. Using the random number as a key, the standard normal distribution table in the system information storage unit 114 is searched and a corresponding value is extracted. The extracted value is multiplied with the standard deviation of the demand quantity distribution of the product and the average value is added to the resultant value, thereby falsely calculating the demand quantity of the product.

The part-by-part order information calculation unit 130 determines an out-of-stock rate to be retrieved on each part and calculates a corresponding order quantity. As an out-of-stock rate to be retrieved, there are an initial out-of-stock rate and a proper out-of-stock rage. After determining the out-of-stock rate to be retrieved, the part-by-part order information calculation unit 130 searches the standard normal distribution table in the system information storage unit 114 using "100% - out-of-rate to be retrieved) as a key and extracts a corresponding value. The part-by-part order information calculation unit 130 multiplies the extracted value with the standard deviation of the order quantity distribution of the product and adds the average value to the resultant value, thereby calculating the initial order quantity.

For each of the parts, the part-by-part order information calculation unit 130 extracts products using the part and the number of the products from the part configuration information storage unit 111. The part-by-part order information calculation unit 130 calculates the necessary quantity of the parts for the product by multiplying the demand quantity of the product with the number of the products for each product using the part in each calculation period.

With respect to the necessary quantity of each part in each calculation period of each product, the part-by-part order information calculation unit 130 adds necessary quantities of the same parts in the same calculation periods to calculate the necessary quantity in each of the calculation periods part by part. By subtracting the necessary quantity in each of the calculation periods of each part from the order quantity in the calculation period of the part, the part-by-part order information calculation unit 130 calculates an excessive/insufficient quantity in the calculation period of the part. If the excessive/insufficient quantity in each of the calculation periods of each part is negative, the part-by-part order information calculation unit 130 adds (1/calculation period) to the out-of-stock rate of the part to calculate the rate of the out-of-stock occurring in the calculation period part by part, and calculates the out-of-stock rate part by part.

The part-by-part order information calculation unit 130 calculates the out-of-stock rate to be calculated by subtracting the out-of-stock rate change interval from the maximum value of the out-of-stock rate to be calculated. The unit 130 calculates the out-of-stock rates to be calculated by subtracting the out-of-stock rate change interval from the calculated out-of-stock rate to be calculated until the out-of-stock rate to be calculated becomes 0 or less.

The part-by-part order information calculation unit 130 calculates, as an out-of-stock rate to be retrieved of the part at each out-of-stock rate to be calculated, the initial order quantity of the part by the above-described procedure for each of parts. For parts other than the part, the unit 130 uses the initial out-of-stock rate as the out-of-stock rate to be retrieved, and calculates the order quantity by the above-described procedure. Using the calculated order quantity, the part-by-part order information calculation unit 130 calculates a part out-of-stock rate and a part combination out-of-stock rate by the above-described procedure. The part-by-part order information calculation unit 130 extracts an out-of-stock rate increase/decrease amount by subtracting the out-of-stock rate from the calculated out-of-stock rate. The part-by-part order information calculation unit 130 calculates an out-of-stock rate increase/decrease amount at each of the out-of-stock rates to be calculated part by part.

The part-by-part order information calculation unit 130 maps information used for calculation of the proper out-of-stock rate so that a proper out-of-stock rate calculation algorithm can be applied. In the embodiment, to calculate the optimum out-of-stock rate, a model is formed as a mixed integer programming. In the mixed integer programming, a constraint condition to be satisfied and an objective function to be allowed are described as a linear equation. Coefficients in the linear equation rare the demand quantity of each product, order quantity of each part, out-of-stock rate of each part, and the like. The part-by-part order information calculation unit 130 substitutes the information into the coefficients in the linear equation, and performs optimization calculation according to the branch and bound method as the solution of the mixed integer programming.

The part-by-part order information calculation unit 130 calculates the order quantity of the part using the proper out-of-stock rate of the part as the out-of-stock rate to be retrieved, and calculates the order quantity part by part.
In the part order information storage unit 140, the order quantity of each part calculated by the part-by-part order information calculation unit 130 is stored. The display unit 151 displays the order quantity of each part.

The input unit 150 is a user interface for receiving an input operation from the user.

The display unit 151 is a user interface for displaying various operation screens, images, and the like in accordance with an instruction of another function unit.

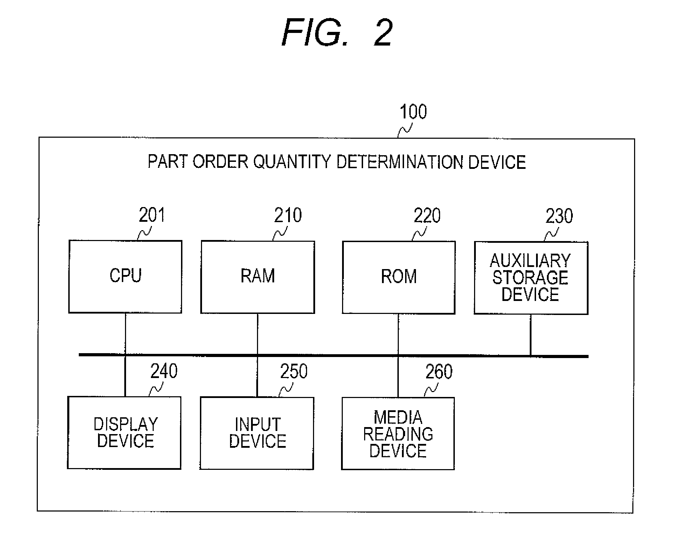

The part order quantity determination device 100 having the various functions is realized by, for example, a computer as shown in FIG. 2.

FIG. 2 is a block diagram illustrating a hardware configuration example of the part order quantity determination device 100. As illustrated in the diagram, the part order quantity determination device 100 has a CPU 201, a RAM 210, a ROM 220, an auxiliary storage device 230, a display device 240, an input device 250, and a media reading device 260. The part order quantity determination device 100 is, for example, a general PC.

The CPU 201 is a unit executing various arithmetic operations. The CPU 201 executes various processes by executing a predetermined part order quantity determination program (not shown) loaded from the auxiliary storage device 230 to the RAM 210.

The part order quantity determination program is, for example, an application program which can be executed on an OS (Operating System) program.

The part order quantity determination program may be installed, for example, from a portable storage medium to the auxiliary storage device 230 via the media reading device 260.

The RAM 210 is a memory storing a program executed by the CPU 201, data necessary for execution of the program, and the like. The ROM 220 is a memory storing a program necessary to start the part order quantity determination device 100.

The auxiliary storage device 230 is, for example, a device such as an HDD (Hard Disk Drive) and may be an SSD (Solid State Drive) using a flash memory or the like.

The display device 240 is, for example, a device such as a CRT display, an LCD (Liquid Crystal Display) or an organic EL (Electro-Luminescence) display. The input device 250 is, for example, a device such as a keyboard, a mouse, a microphone, and the like.

The media reading device 260 is a device reading information of a portable storage medium having portability such as a CD-ROM.

The part-by-part order information calculation unit 130 is realized, for example, when the CPU 201 executes the part order quantity determination program loaded to the RAM 210. The data in the product-by-product information storage unit 110, the part configuration information storage unit 111, the product-by-product demand quantity distribution storage unit 112, the part-by-part information storage unit 113, the system information storage unit 114, the part-by-part order information calculation unit 130, and the part-by-part order information storage unit 140 is stored in, for example, the RAM 210 or the auxiliary storage device 230.

The input unit 150 is realized, for example, when the CPU 201 executes a predetermined program to control the input device 250 and the auxiliary storage device 230. The display unit 151 is realized, for example, when the CPU 201 executes the predetermined program to control the display device 240.

Next, the part order quantity determining process realized by the part order quantity determination device 100 will be described.

First, a dedicated part and a common part will be defined. A dedicated part refers to a part used only in one product. A common part refers to a part used in plural products.

Next, an out-of-stock rate of a product and that of a part will be defined. The out of stock of a product is defined as a state where one or more parts in a target product is/are out of stock. The product out-of-stock rate is a rate of a period in which a target product is out of stock in calculation periods, that is, (the number of periods in which the product is out of stock/calculation periods)x100%. The out-of-stock rate of a dedicated part is (the number of periods in which the part is out of stock/calculation periods) $\times$100%. In the embodiment, in the case where a common part becomes short, it is assumed that one of products using the common part which becomes short is out of stock. On the basis of the assumption, the out-of-stock rate of only the common part in the product is defines as (the number of periods in which the dedicated part in a target product is not out of stock and one or more common parts are out of stock/the number of products using the common part which is out of stock/calculation periods) x 100%. Consequently, the product out-of-stock rate is defined as a value obtained by adding the out-of-stock rate of only the common part in the product to the out-of-stock rate of the dedicated part.

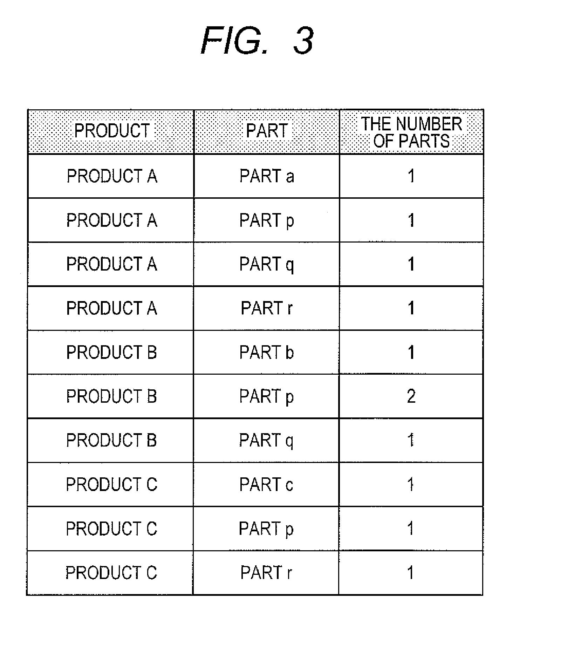

In the following, for easier understanding, target models of part order quantity determination will be described as an example. First, with reference to FIGS. 3, 4, 5, and 6, target models will be described.

As shown in FIG. 3, target products are three kinds of products A, B, and C and target parts are six kinds of parts a, b, c, , q, and r. The product A is made of one part a, one part p, one part q, and one part r. The product B is made of one part b, one part q, and two parts p. The product C is made of one part c, one part p, and one part r. The parts a, b, and c are dedicated parts and the parts p, q, and r are common parts.

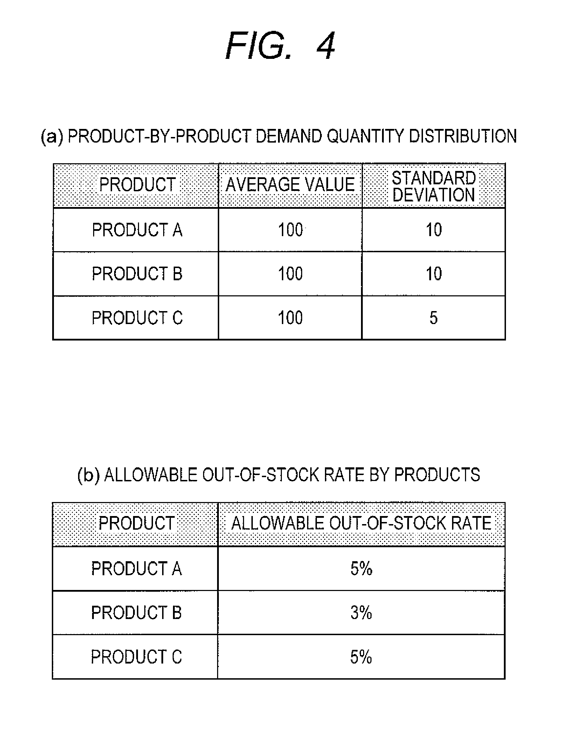

It is assumed that the demand quantity distributions of the products A, B, and C are according to the normal distribution, and the average value and the standard deviation are shown in FIG. 4(a). The average value of the product A is 100 and the standard deviation is 10. The average value of the product B is 100 and the standard deviation is 10. The average value of the product C is 100 and the standard deviation is 5. FIG. 4(b) shows the allowable out-of-stock rate by products. The allowable out-of-stock rate of the product A is 5%, that of the product B is 3%, and that of the product C is 5%.

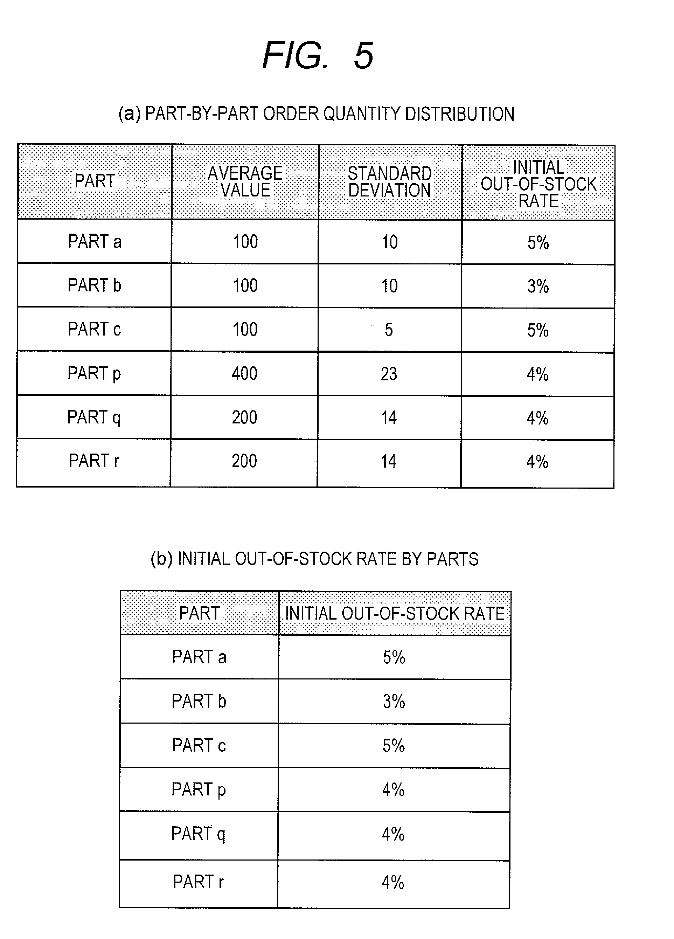

It is assumed that the order quantity distributions of the parts a, b, c, p, q, and r are according to the normal distribution, and the average value and the standard deviation are shown in FIG. 5(a). The average value of the part a is 100 and the standard deviation is 10. The average value of the part b is 100 and the standard deviation is 10. The average value of the part c is 100 and the standard deviation is 5. The average value of the part p is 400 and the standard deviation is 23. The average value of the part q is 200 and the standard deviation is 14. The average value of the part r is 200 and the standard deviation is 14. FIG. 5(b) shows the initial out-of-stock rate by parts. The initial out-of-stock rate of the part a is 5%, that of the part b is 3%, that of the part c is 5%, and that of each of the parts p, q, and r is 4%.

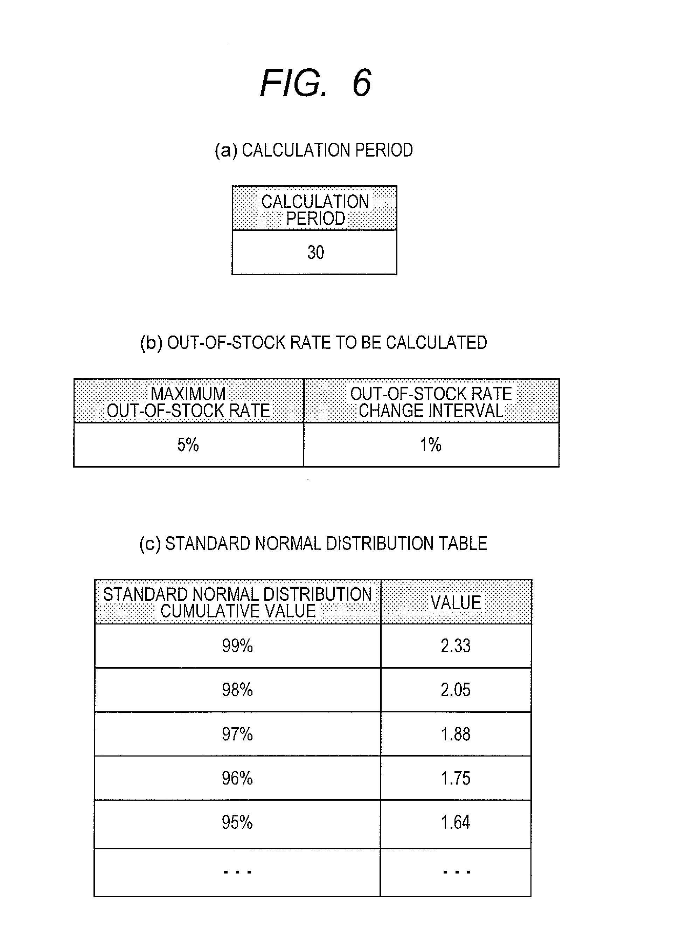

FIG. 6(a) shows the calculation period. In the embodiment, it is assumed that the calculation periods are 30. FIG. 6(b) shows the maximum value and the change interval of an out-of-stock rate to be calculated. The maximum value is 5% and the change interval is 1%. FIG. 6(c) shows a standard normal distribution table. The standard normal distribution table is made by a standard normal distribution cumulative value and a value at that time.

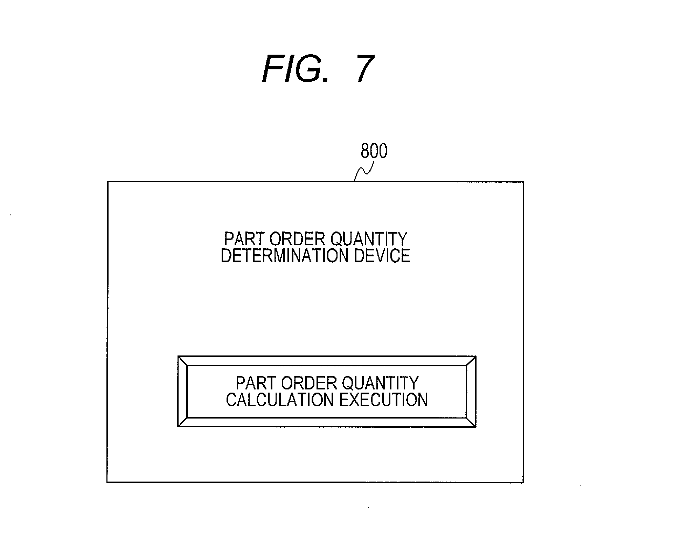

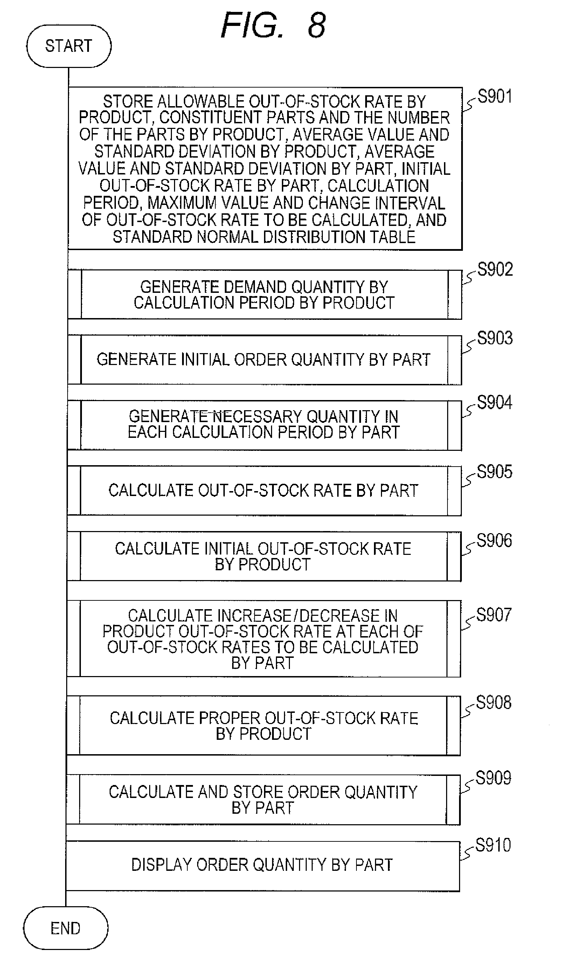

A screen shown in FIG. 7 is an example of a start screen displayed when the user starts the part order quantity determining process program by a predetermined operation. When the user selects a part order quantity execution icon with the input device, a part order quantity determining process flow of FIG. 8 starts.

After the part order quantity determining process flow starts, the input unit 150 receives the allowable out-of-stock rate by product, the constituent parts and the number of the parts by product, the average value and standard deviation of the demand quantity distribution by product, the average value and standard deviation of the order quantity distribution by part, the initial out-of-stock rate by part, the calculation period, the maximum value and change interval of the out-of-stock rate to be calculated, and the standard normal distribution table and stores them into the storage units (S901).

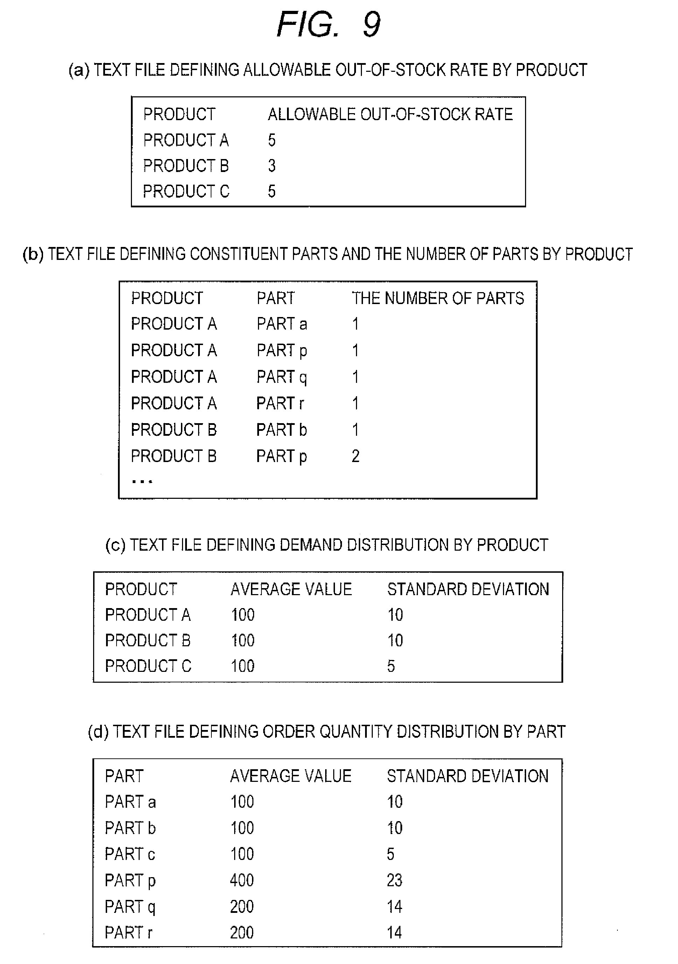

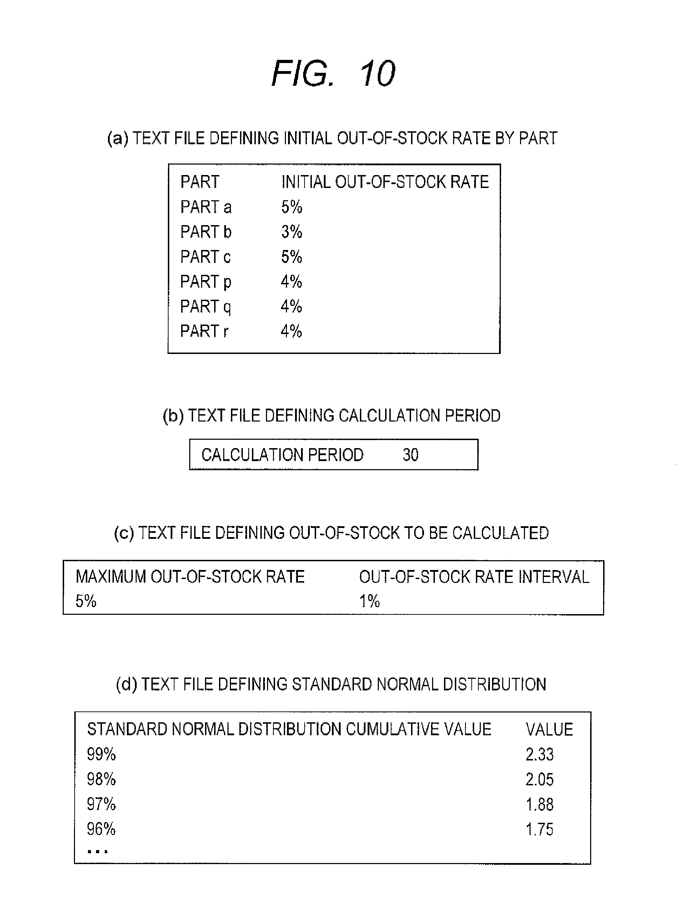

Concretely, for example, the input unit 150 receives text files including description of the allowable out-of-stock rate by products, the constituent parts and the number of the parts by products, the average value and standard deviation of the demand quantity distribution by products, the average value and standard deviation of the order quantity distribution by parts, the initial out-of-stock rate by parts, the calculation period, the maximum value and change interval of the out-of-stock rate to be calculated, and the standard normal distribution table. The contents of the text files are described, for example, as shown in FIGS. 9(a) to 9(d) and FIGS. 10(a) to 10(d). FIG. 9(a) shows the contents of a text file defining the allowable out-of-stock rate by products. FIG. 9(b) shows the contents of a text file defining constituent parts of each product and the number of the parts. FIG. 9(c) shows the contents of a text file defining the average value and the standard deviation of the demand quantity distribution of each product. FIG. 9(d) shows the contents of a text file defining the average value and the standard deviation of the order quantity distribution of each part. FIG. 10(a) shows the contents of a text file defining the initial out-of-stock rate of each part. FIG. 10(b) shows the contents of a text file defining the calculation period. FIG. 10(c) shows the contents of a text file defining the maximum value and the change interval of the out-of-stock rate to be calculated. FIG. 10(d) shows the contents of a text file defining the standard normal distribution table.

Subsequently, the input unit 150 stores the received allowable out-of-stock rate by products, the constituent parts and the number of the parts by products, the average value and standard deviation of the demand quantity distribution by products, the average value and standard deviation of the order quantity distribution by parts, the initial out-of-stock rate by parts, the calculation period, the maximum value and change interval of the out-of-stock rate to be calculated, and the standard normal distribution table into the storage units.

Concretely, the input unit 150 sequentially extracts the allowable out-of-stock rate of each product from the received text file (FIG. 9(a)) and stores it in the product-by-product information storage unit 110. The input unit 150 sequentially extracts the constituent parts and the number of the parts by products from the received text file (FIG. 9(b)) and stores them into the part configuration information storage unit 111. The input unit 150 sequentially extracts the average value and standard deviation of the demand quantity distribution by products from the received text file (FIG. 9(c)) and stores them into the product-by-product demand quantity distribution storage unit 112. The input unit 150 sequentially extracts the average value and standard deviation of the order quantity distribution by parts from the received text file (FIG. 9(d)) and stores them into the part-by-part information storage unit 113. The input unit 150 sequentially extracts the initial out-of-stock rate of each part from the received text file (FIG. 10(a)) and stores them into a record of the part in the part-by-part information storage unit 113. The input unit 150 extracts the calculation period from the received text file (FIG. 10(b)) and stores it into the system information storage unit 114. The input unit 150 extracts the maximum value and change interval of the out-of-stock rate to be calculated from the received text file (FIG. 10(c)) and stores them into the system information storage unit 114. The input unit 150 extracts the standard normal distribution table from the received text file (FIG. 10(d)) and stores it into the system information storage unit 114.

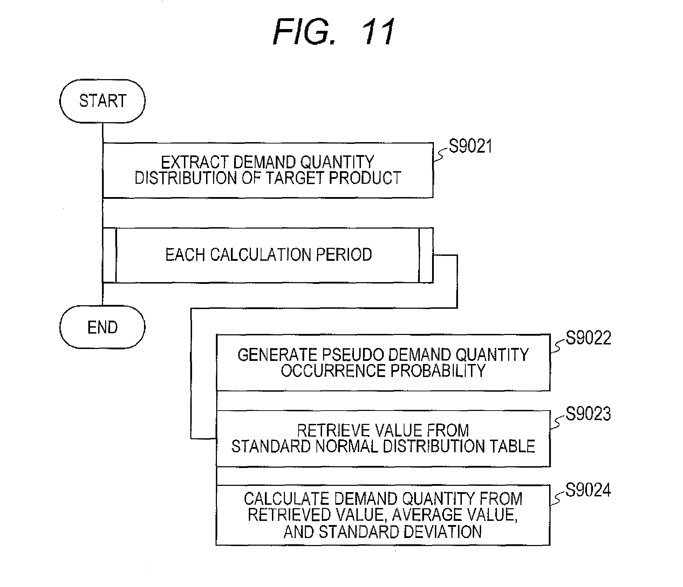

After that, the part-by-part order information calculation unit 130 calculates the demand quantity in each calculation period product by product (S902). With reference to FIG. 11, a process of calculating the demand quantity in each calculation period for each of the products will be described below. FIG. 11 is a flowchart showing the flow of the process of calculating the demand quantity in each calculation period for each of the products. In the embodiment, the process on the product A will be described as an example.

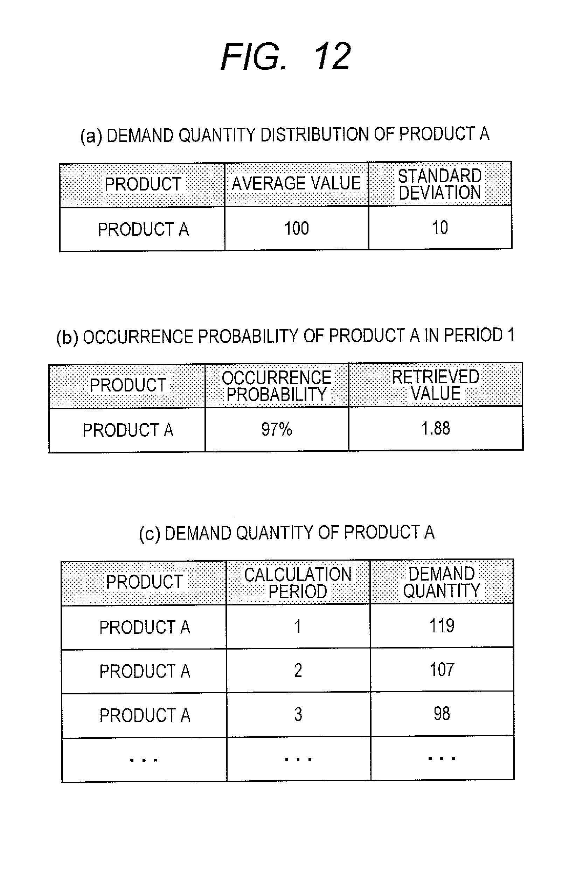

When the flow starts, the part-by-part order information calculation unit 130 refers to the product-by-product demand quantity distribution storage unit 112 and extracts the average value and the standard deviation of the demand quantity distribution of a target product (S9021). In this case, as illustrated in FIG. 12(a), information of the product A, the unit 130 extracts the average value 100, and the standard deviation 10. Subsequently, the unit 130 extracts the calculation period from the system information storage unit 114 and repeats the following process by the number of the calculation periods. First, it is assumed that the calculation period is 1. A random number is generated as a value from 0 to 100 and is used as the demand quantity occurrence probability (S9022). As an example, as illustrated in FIG. 12 (b), the occurrence probability in the calculation period 1 of the product A is 97%. Using the occurrence probability calculated in step S9022 as a key, the standard normal distribution table in the system information storage unit 114 is referred to, and the value is retrieved (S9023). In this case, the retrieved value is 1.88 (FIG. 12(b)).
The retrieved value is multiplied with the standard deviation of the demand quantity distribution of the product, and the average value of the demand quantity distribution of the product is added to the resultant value, thereby calculating the demand quantity of the product.
The demand quantity is calculated as 1.88 x 10 + 100 = 119. The calculation period is incremented by one, and the unit 130 returns to step S9022. The unit 130 calculates the demand quantity of each product by the amount of the calculation periods. It is assumed that the demand quantity is calculated as illustrated in FIG. 12(c). Referring again to FIG. 8, the description will be continued.

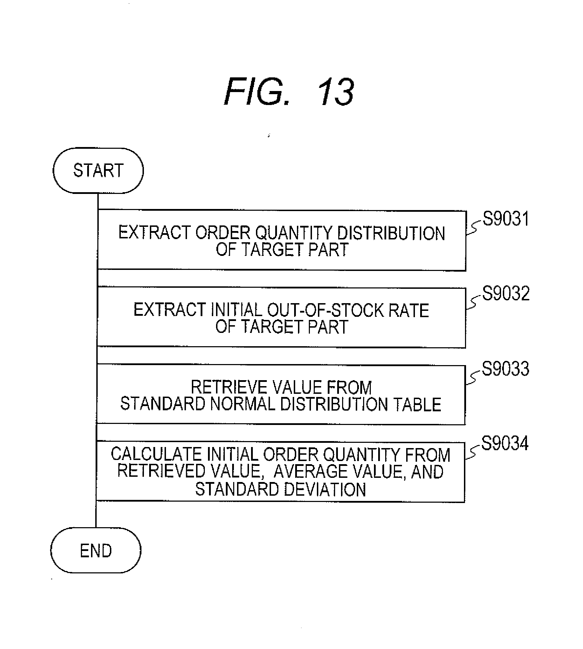

Subsequently, the part-by-part order information calculation unit 130 calculates the initial order quantity part by part (S903). With reference to FIG. 13, a process of calculating the initial order quantity part by part will be described below. FIG. 13 is a flowchart showing the flow of the process of calculating the initial order quantity part by part. In the embodiment, the process on the part "p" will be described as an example.

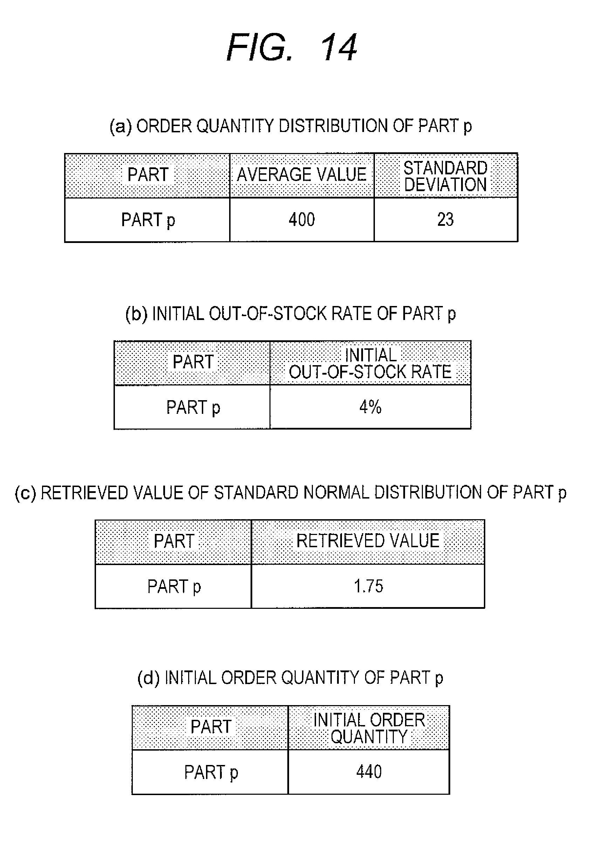

The part-by-part order information calculation unit 130 refers to the part-by-part information storage unit 113 and extracts the average value and the standard deviation of the order quantity distribution of a target part (S9031). In this case, as illustrated in FIG. 14(a), the unit 130 extracts the information of the part "p", the average value 400, and the standard deviation 23. Subsequently, the unit 130 extracts the initial out-of-storage rate of the target part from the part-by-part information storage unit 113 (S9032). In this case, as illustrated in FIG. 14(b), the unit 130 extracts the information of 4% as the initial out-of-stock rate of the part "p". Using "100 - initial out-of-stock rate" as a key, the unit 130 refers to the standard normal distribution table in the system information storage unit 114 and retrieves a value (S9033). In this case, the unit 130 retrieves a value corresponding to 96% in the standard normal distribution table, which is 1.75 as shown in FIG. 14(c). The unit multiplies the value with the standard deviation of the order quantity distribution of the part, and adds the average value of the order quantity distribution of the part to the resultant value, thereby calculating the initial order quantity of the part (S9034). In this case, the initial demand quantity is calculated as 1.75 x 23 + 400 = 440 (FIG. 14(d)). The initial order quantity is calculated on all of the parts. Referring again to FIG. 8, the description will be continued.

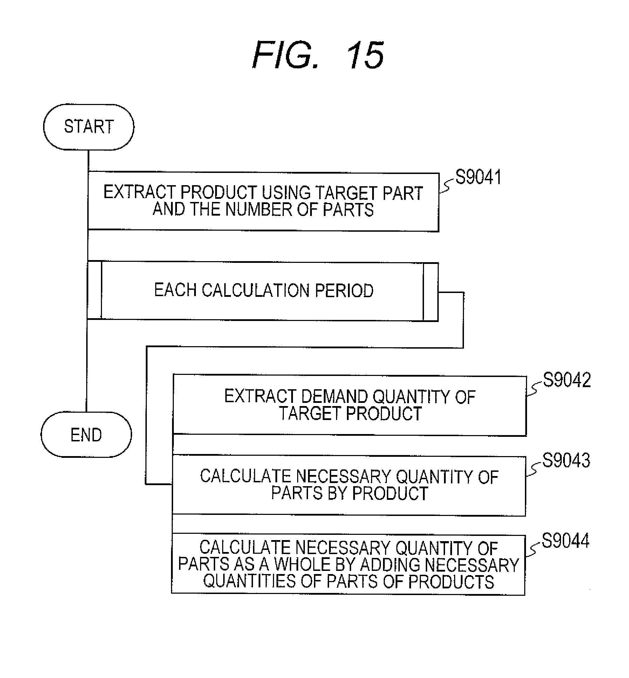

Subsequently, the part-by-part order information calculation unit 130 calculates the quantity necessary in each of the calculation periods part by part (S904). With reference to FIG. 15, a process of calculating the quantity necessary in each of the calculation periods part by part will be described below. FIG. 15 is a flowchart showing the flow of the process of calculating the quantity necessary in each of the calculation periods part by part. In the embodiment, the process on the part "p" will be described as an example.

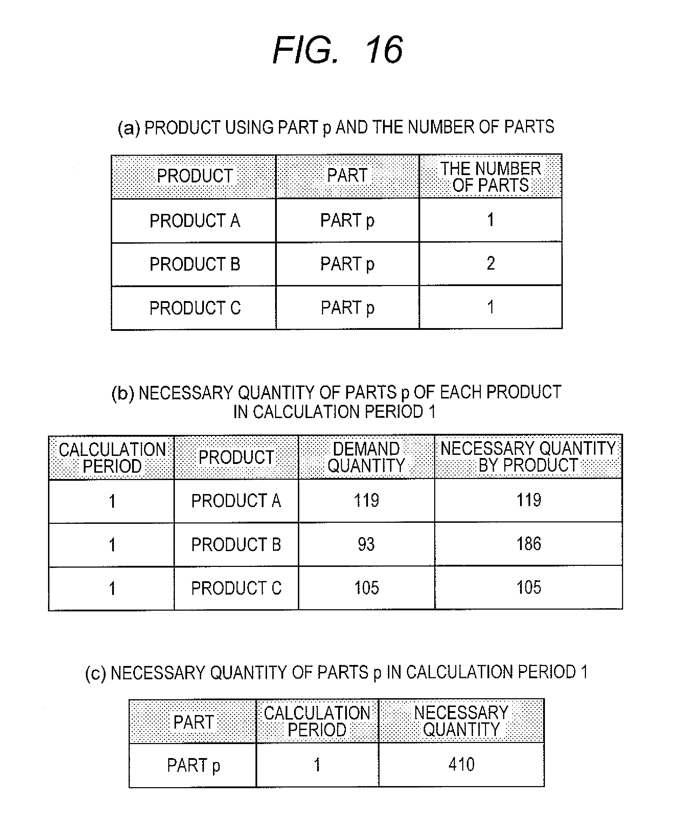

The part-by-part order information calculation unit 130 refers to the part configuration information storage unit 111 and extracts products using the target part and the number of the products (S9041). In this case, as illustrated in FIG. 16(a), the unit 130 extracts the information of the number of the product A as 1, the number of the products B as 2, and the number of the products C as 1. Subsequently, the unit 130 repeats the following process by the amount of the calculation periods. First, the calculation period is set as 1. The unit 130 extracts the demand quantity in the target calculation period calculated in step S902 with respect to a product using the target part (S9042). It is assumed here that, as illustrated in FIG. 16(b), the unit 130 extracts the information of 1 as the calculation period, the demand quantity of the product A as 119, the demand quantity of the product B as 93, and the demand quantity of the product C as 105. The unit 130 multiplies the demand quantity in the target calculation period with the number of products, thereby calculating the necessary quantity of each product (S9043). In this case, as illustrated in FIG. 16(b), the necessary quantity of the product A is 119, that of the product B is 186, and that of the product C is 105. The unit 130 adds part necessary quantities for products in the target calculation period to calculate the total necessary quantity of the part (S9044). The necessary quantity in the calculation period 1 is calculated as 119 + 186 + 105 = 410 (FIG. 16(c)). The unit 130 calculates the necessary quantity in each calculation period part by part. Referring again to FIG. 8, the description will be continued.

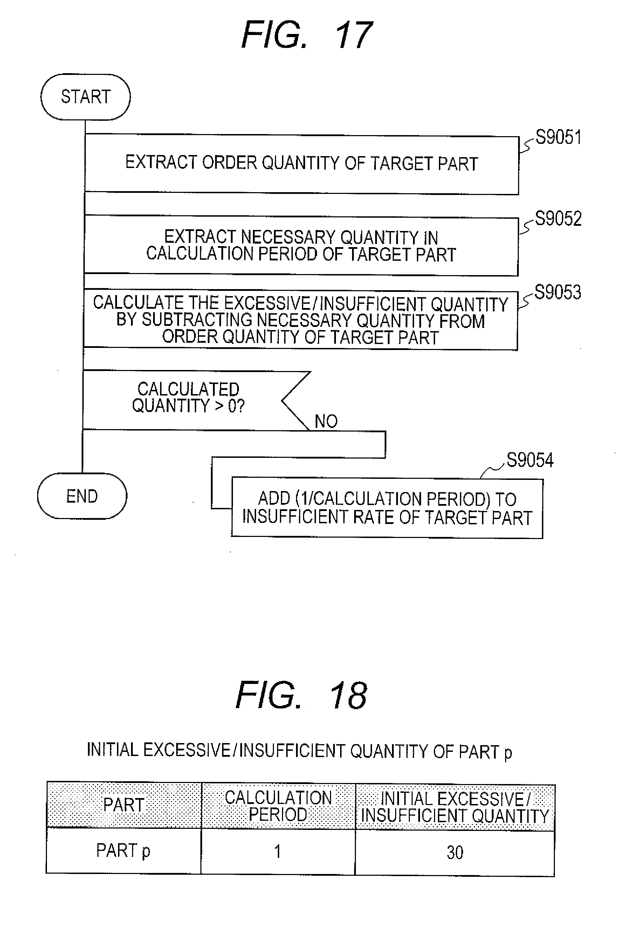

Subsequently, the part-by-part order information calculation unit 130 calculates the initial out-of-stock rate part by part (S905). With reference to FIG. 17, a process of calculating the initial out-of-stock rate part by part will be described below. FIG. 17 is a flowchart showing the flow of the process of calculating the initial out-of-stock rate part by part. In the embodiment, the process on the part "p" will be described as an example.

The part-by-part order information calculation unit 130 repeats the following process by the amount of the calculation period. First, the calculation period is set as 1. The unit 130 extracts the initial order quantity of the target part calculated in step S903 (S9051). It is assumed here that the unit 130 extracts the information of the initial order quantity of 440 of the part "p" shown in FIG. 14(d). Next, the unit 130 extracts the necessary quantity of the target calculation period calculated in step S904 (S9052). In this case, the unit 130 extracts the necessary quantity 410 in the calculation period 1 of the part "p" shown in FIG. 16(c). The unit 130 subtracts the necessary quantity from the initial order quantity to calculate initial excessive/insufficient quantity in each of the calculation periods of the target part (S9053). In this case, the initial excessive/insufficient quantity is calculated as 440 - 410 = 30 (FIG. 18). In the case where the calculated initial excessive/insufficient quantity is negative, only (1/calculation period) is added to the out-of-stock rate of the target part (S9054). The initial out-of-stock rate is calculated on all of the parts. Referring again to FIG. 8, the description will be continued.

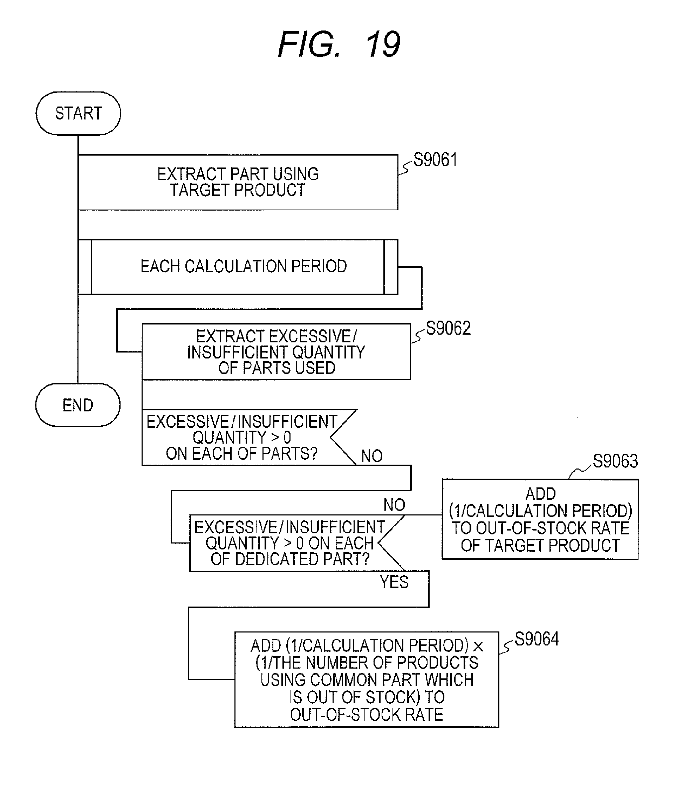

The part-by-part order information calculation unit 130 calculates the initial out-of-stock rate product by product (S906). It will be concretely described with reference to FIG. 19. FIG. 19 is a flowchart showing the flow of the process of calculating the initial out-of-stock rate product by product. In the embodiment, the process on the product "A" will be described as an example.

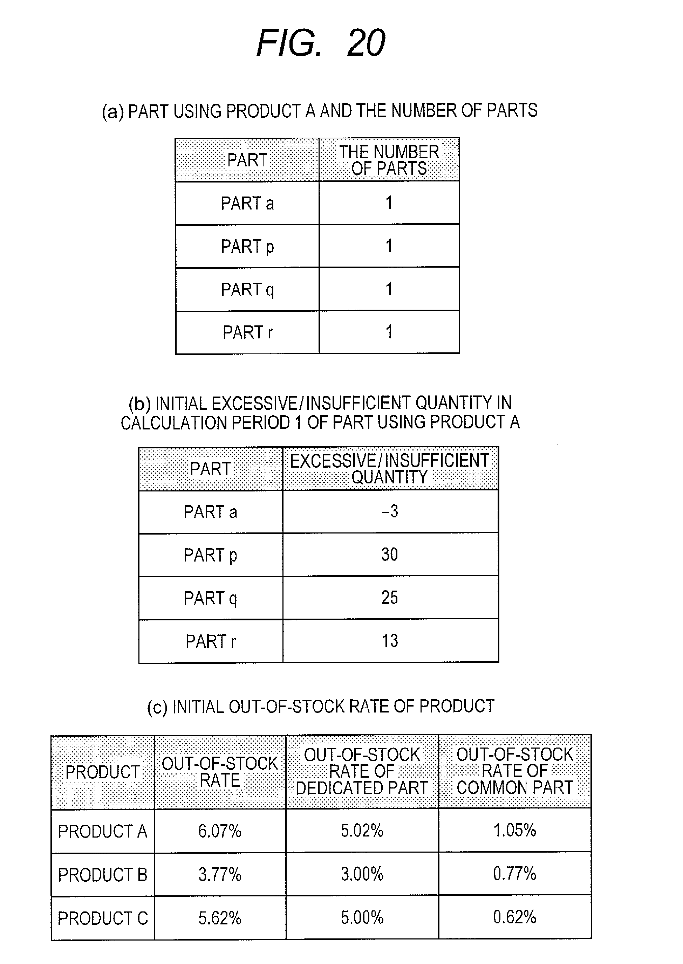

First, the part-by-part order information calculation unit 130 extracts parts used in target products and the number of parts from the part configuration information storage unit 111 (S9061). As illustrated in FIG. 20(a), the unit 130 extracts one piece of information for each of the parts a, p, q, and r. The part-by-part order information calculation unit 130 repeats the following process by the amount of the calculation period. First, the calculation period is set as 1. The unit 130 extracts the initial excessive/insufficient quantity in a target period for each of the parts to be used, calculated in step S905 (S9062). As shown in FIG. 20(b), the unit 130 extracts the information of the excessive/insufficient quantity of the part "a" as -3, that of the part "p" as 30, that of the part "q" as 25, and that of the part "r" as 13. When the excessive/insufficient quantity is positive in all of parts used in a target product, the unit 130 increments the calculation period by one and returns to step S9062.

In the case where there is even one part whose excessive/insufficient quantity is negative and the excessive/insufficient quantity of a dedicated part is negative, (1/calculation period) is added to the out-of-stock rate of the target product (S9063). The embodiment corresponds to the case, and 1/30 is added to the out-of-stock rate of the product A. In the case where there is even one part whose excessive/insufficient quantity is negative and the excessive/insufficient quantity of all of the dedicated parts is positive, (1/calculation period)x(1/the number of products using a common part whose excessive/insufficient quantity is negative) is added to the out-of-stock rate of the target product (S9064). It is based on the fact that, in the case where a common part is out of stock, it is assumed that any one of products using the common part becomes out of stock. The unit 130 increments the calculation period by one and returns to S9062. FIG. 20(c) shows a result of executing the step S906 by the amount of the calculation period in the embodiment. In the embodiment, the dedicated part out-of-stock rate is 5.02%, the common part out-of-stock rate is 1.05%, and the out-of-stock rate of the product A is 6.07%. Referring again to FIG. 8, the description will be continued.

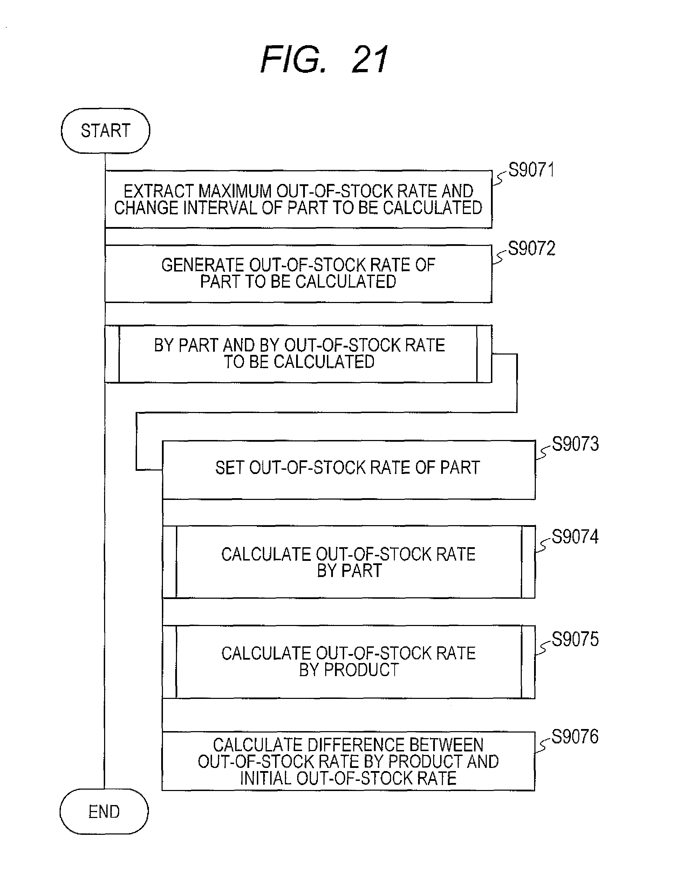

Subsequently, the part-by-part order information calculation unit 130 calculates the product out-of-stock rate at each of out-of-stock rates to be calculated part by part (S907). With reference to FIG. 21, a process of calculating the product out-of-stock rate in the case of each of out-of-stock rates to be calculated part by part will be described below.

FIG. 21 is a flowchart showing the flow of the process of calculating the product out-of-stock rate in the case of each of the out-of-stock rates to be calculated part by part. In the embodiment, the process on the part "p" will be described as an example.

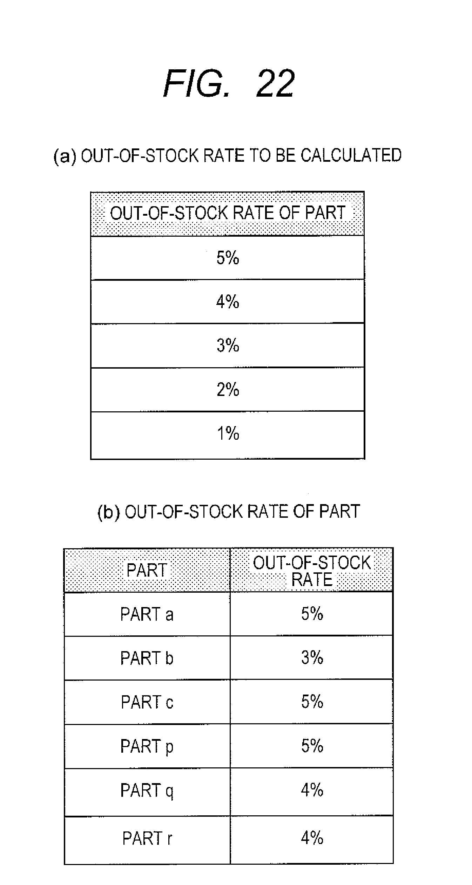

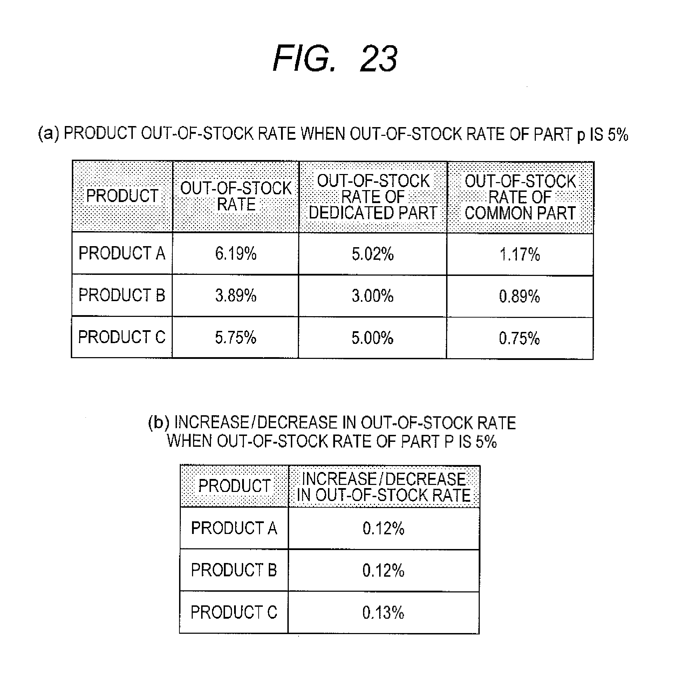

The part-by-part order information calculation unit 130 extracts the maximum value and the change interval of the out-of-stock rates to be calculated from the system information storage unit 114 (S9071). In this case, the information of the maximum value of 5% and the change interval of 1% of the out-of-stock rates to be calculated illustrated in FIG. 6(b) is extracted. The unit 130 generates the out-of-stock rates to be calculated while subtracting the change interval each from the maximum value of the out-of-stock rates to be calculated to 0 (S9072).
As shown in FIG. 22(a), 5%, 4%, 3%, 2%, and 1% are generated as the out-of-stock rates to be calculated. Next, the following process is executed at each of the out-of-stock rates to be calculated part by part. First, the out-of-stock rate to be calculated is set as 5%. The out-of-stock rate of a target part is set as the out-of-stock rate to be calculated, and that of other parts is set as the initial out-of-stock rate (S9073). In this case, as shown in FIG. 22(b), the out-of-stock rate of the part "a" is set as 5%, that of the part "b" is set as 3%, that of the part "c" is set as 5%, that of the part "p" is set as 5%, that of the part "q" is set as 4%, and that of the part "r" is set as 4%. The initial out-of-stock rate calculated in step S905 is replaced with the out-of-stock rate set in step S9073, thereby calculating the out-of-stock rate of each part (S9074). For the calculated out-of-stock rate of each part, the out-of-stock rate of each product is calculated by the same process as that in step S906 (S9075). As shown in FIG. 23(a), the out-of-stock rate of the product A is 6.19%, that of the product B is 3.89%, and that of the product C is 5.75%. By subtracting the initial out-of-stock rate of the product calculated in step S906 from the calculated out-of-stock rate of the product, increase/decrease in the out-of-stock rate is calculated (S9076). AS shown in FIG. 23(b), the increase/decrease in the out-of-stock rate of the products A and B is 0.12%, and that of the product C is 0.13%. Referring again to FIG. 8, the description will be continued.

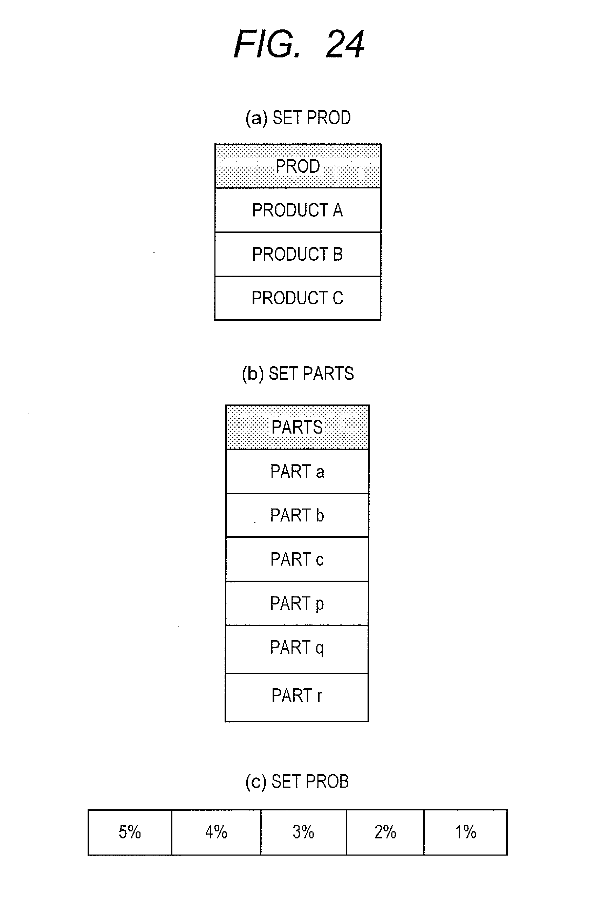

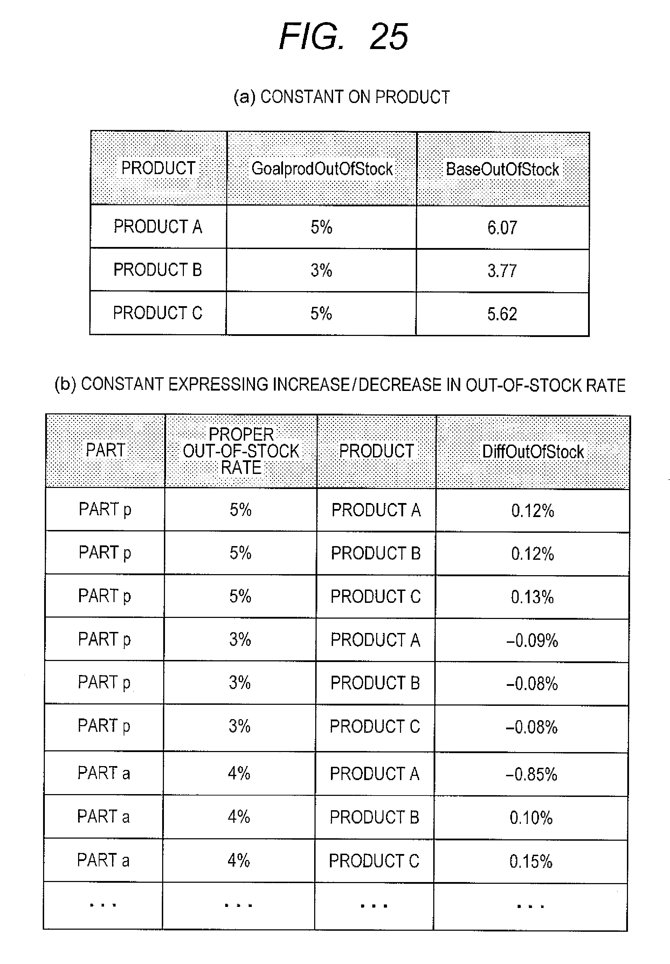

Subsequently, the part-by-part order information calculation unit 130 calculates a proper out-of-stock rate part by part in accordance with an optimization algorithm (S908). In the embodiment, to calculate the proper out-of-stock rate of each part, a model is formed as a mixed integer programming, and the proper out-of-stock rate is calculated by the branch and bound method. In the mixed integer programming, a constraint condition to be satisfied and an objective function to be minimized are described as a linear equation. In the embodiment, the number of constraint conditions is three and the number of the objective function is one. The details will be described below. First, sets used in a linear equation will be described. A set PROD indicates a set of products. A set PARTS denotes a set of parts. A set PROB indicates a set of out-of-stock rates to be calculated. The sets in the embodiment are shown in FIGS. 24(a) to 24(c). FIG. 24(a) shows the set PROD. FIG. 24(b) shows the set PARTS. FIG. 24(c) shows the set PROB of the out-of-stock rates to be calculated. Next, constants used in the linear equation will be described. A constant $GoalprodOutOfStock_{prod}$ denotes the allowable out-of-stock rate of the product prod included in the set PROD. A constant $BaseOutOfStock_{prod}$ denotes the initial out-of-stock rate of the product prod included in the set PROD. A constant DiffOutOfStockparts,prod, prob indicates increase/decrease in the out-of-stock rate of the product prod in the case where the part parts is equal to the out-of-stock rate prob with respect to parts included in the set PARTS, prod included in the set PROD, and prob included in the set PROB. The constants in the embodiment are shown in FIGS. 25(a) and 25(b). FIG. 25(a) shows the constant GoalprodOutOfStockprod. FIG. 25(b) shows the constant DiffOutOfStockparts,prod,prob. Next, variables used in the linear equation will be described. A variable outOfStockprod denotes the out-of-stock rate of the product prod included in the set PROD. A variable outOfStockMinprod denotes the difference obtained by subtracting the out-of-stock rate from the allowable out-of-stock rate of the product prod included in the set PROD. A variable flagOutOfStockparts, prob denotes an out-of-stock rate flag which is 1 in the case where the proper out-of-stock rate of parts included in the set PARTS is prob and is 0 in the case where the proper out-of-stock rate of parts does not become prob included in the set PROB.

Constraint conditions in the embodiment will be described. A first constraint condition is a constraint on the out-of-stock rate of the product prod included in the set PROD. When the out-of-stock rate of prod and the difference of the out-of-stock rates are added, the allowable out-of-stock rate is obtained. The constraint equation is expressed as follows.

$$GoalprodOutOfStock_{prod} = outOfStock_{prod} + outOfStockMin_{prod}$$

... Formula 1

A second constraint condition is a constraint defining the out-of-stock rate of the product prod included in the set PROD as addition of increase/decrease from the initial out-of-stock rate. The out-of-stock rate of prod is probability obtained by adding an increase/decrease amount from the initial out-of-stock rate in the proper out-of-stock rate to the initial out-of-stock rate on parts included in the set PARTS. The constraint equation is expressed as follows.

$$outOfStock_{prod} = BaseOutOfStock_{prod}$$
$$+ \sum_{parts \in PARTS} \sum_{probe \in PROB} \left( \begin{array}{c} DiffOutOfStock_{parts,prod,prob} \\ \times flagOutOfStock_{parts,prob} \end{array} \right)$$

$$\ldots \text{ Formula 2}$$

A third constraint condition is a constraint regarding an out-of-stock flag of parts included in the set PARTS and prob included in the set PROB. The out-of-stock rate of parts is determined as one value. That is, the out-of-stock flag is 1 only at one out-of-stock rate per part. The constraint equation is expressed as follows.

$$\sum_{probe \in PROB} flagOutOfStock_{parts,prob} = 1$$

$$\ldots \text{ Formula 3}$$

Next, an objective function in the embodiment will be described. An objective function is used to bring the out-of-stock rate of the product prod included in the set PROD close to the allowable out-of-stock rate. The objective function is expressed by the following equation.

$$\min \quad \sum_{prod \in PROD} outOfStockMin_{prod}$$

$$\ldots \text{ Formula 4}$$

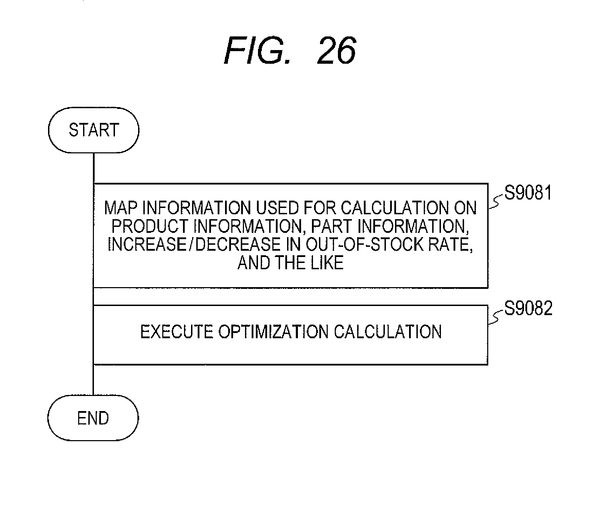

With reference to FIG. 26, a process of calculating the proper out-of-stock rate part by part using the optimization algorithm will be described. FIG. 26 is a flowchart showing the flow of the process of calculating the proper out-of-stock rate part by part by optimization calculation.

First, values are mapped in a constant part of the constraint formulae and the objective functions stored in advance (S9081). The first constraint formula will be described as an example. The first constraint is calculated on all of products included in the set PROD. The part-by-part order information calculation unit 130 extracts the allowable out-of-stock rate of the target product with reference to the product-by-product information storage unit 110. By substituting the value for GoalprodOutOfStock$_{prod}$, the constraint formula is completed. In this case, three constraint formulae on the allowable out-of-stock rates of the products A, B, and C are calculated.

The first constraint formula of the product A is expressed as follows.

$$5 = outOfStock_{product\ A} + outOfStockMin_{product\ A}$$

$$\dots \text{Formula 5}$$

The first constraint formula of the product B is expressed as follows.

$$3 = outOfStock_{product\ B} + outOfStockMin_{product\ B}$$

$$\dots \text{Formula 6}$$

The first constraint formula of the product C is expressed as follows.

$$5 = outOfStock_{product\ C} + outOfStockMin_{product\ C}$$

$$\dots \text{Formula 7}$$

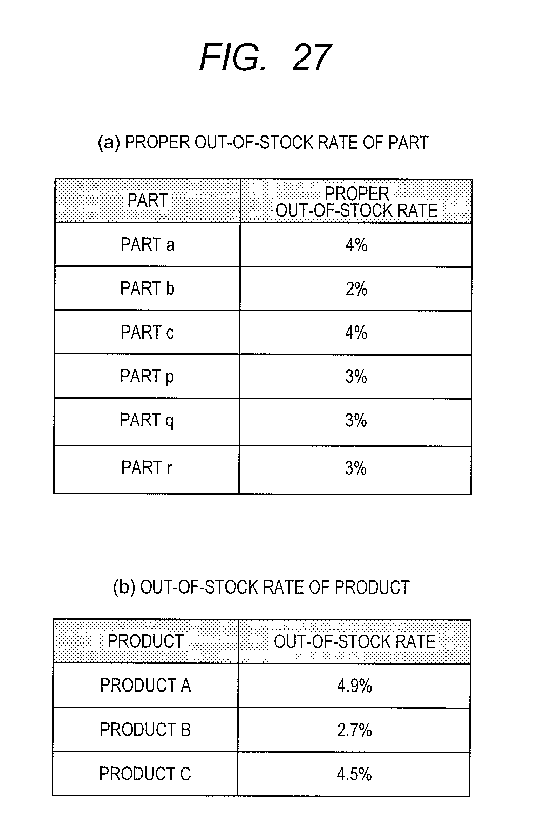

Subsequently, according to the branch and bound method as a solution of the mixed integer programming, the proper out-of-stock rate of each part, closest to the allowable out-of-stock rate is calculated (S9082). At this time, as shown in FIG. 27(a), the proper out-of-stock rate of the part "a" becomes 4%, that of the part "b" becomes 2%, that of the part "c" becomes 4%, that of the part "p" becomes 3%, that of the part "q" becomes 3%, and that of the part "r" becomes 3%. At this time, the out-of-stock rate of the product A is 4.9%, that of the product B is 2.7%, and that of the product C is 4.5%. Any of the products does not exceed the allowable out-of-stock rate. Referring again to FIG. 8, the description will be continued.

The part-by-part order information calculation unit 130 replaces the initial out-of-stock rate in step S903 with the proper out-of-stock rate and calculates the order quantity part by part (S909). In this case, the order quantities of the parts a, b, c, p, q, and r are 118, 121, 109, 443, 226, and 226, respectively. The calculated order quantities of the parts are stored in the part-by-part order information storage unit 140. Referring again to FIG. 8, the description will be continued.

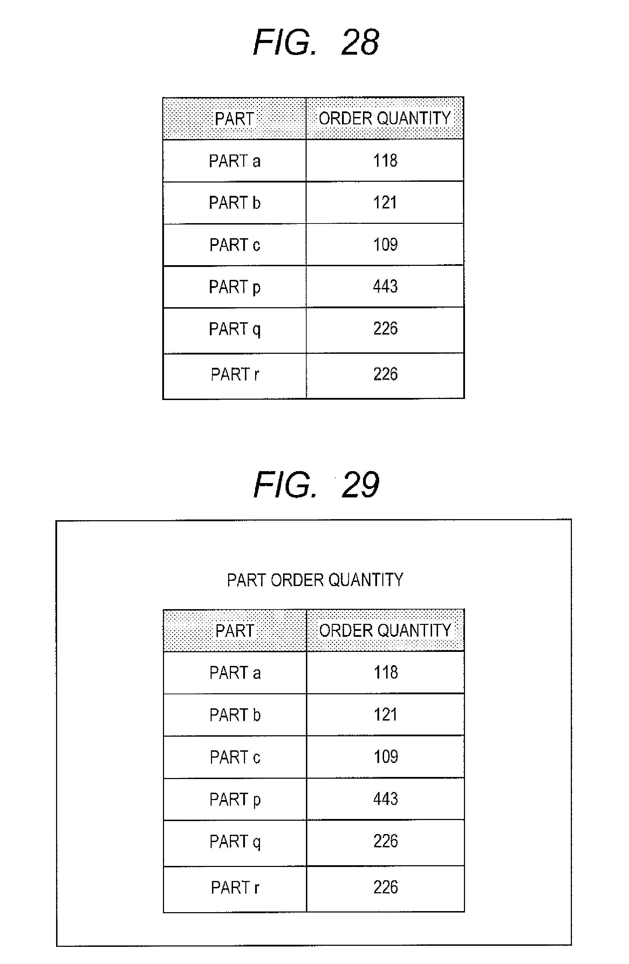

The order quantity of each part stored in the part-by-part order information storage unit 140 is displayed to the user via the display unit 151 (S910). Concretely, the display unit 151 obtains the order quantity of each part from the part-by-part order information storage unit 140 and displays it on a display such as a CRT as illustrated in FIG. 29, or may transmit it to an external computer via a communication unit (not shown). After that, the flow of FIG. 8 is finished. In such a manner, the part order quantity determining process is executed.

An embodiment of the present invention has been described. According to the embodiment, the order quantity of each part at which the out-of-stock rate of each product is closest to the allowable value can be calculated without exceeding the allowable out-of-stock rate of each product.

Second Embodiment

A second embodiment of the present invention will now be described with reference to the drawings. In the embodiment, the user enters a management index, and the part order quantity at which the value of a designated management index becomes the best within a range in which the out-of-stock rate of each product does not exceed the allowable value is calculated. In the embodiment, the case where the user designates a part order amount of money will be described as an example.

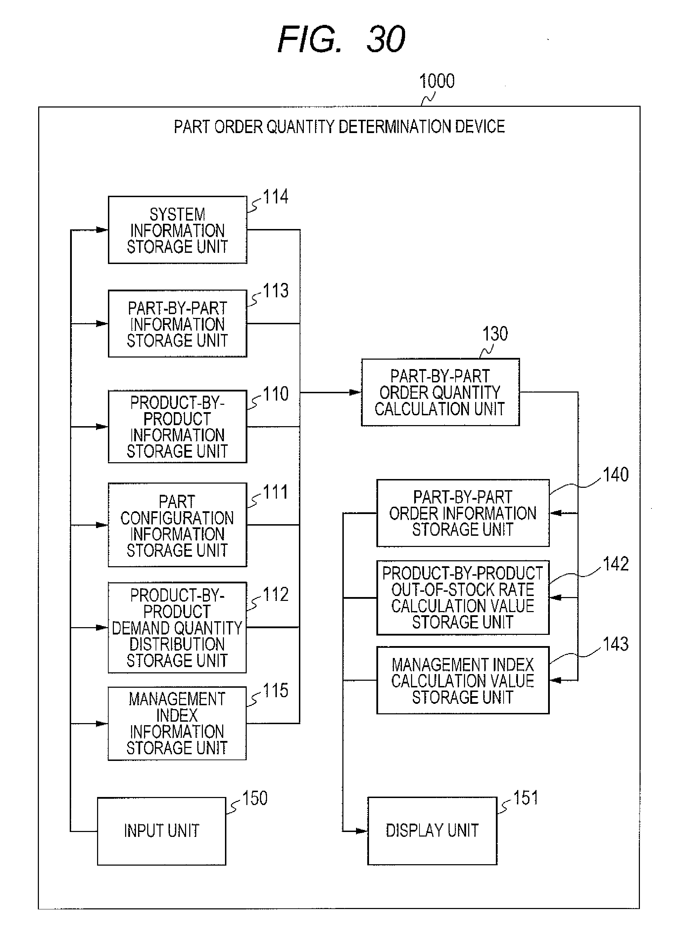

FIG. 30 is a block diagram illustrating a functional configuration of a part order quantity determination device 1000 according to an embodiment of the present invention. As shown in the diagram, the part order quantity determination device 1000 has, in addition to the part order quantity determination device 100 in the first embodiment, a management index information storage unit 115, a product-by-product out-of-stock rate calculation value storage unit 142, and a management index calculation value storage unit 143.

In the management index information storage unit 115, the name of a management index designated by the user is stored. In the product-by-product out-of-stock rate calculation value storage unit 142, the out-of-stock rate of each product calculated by the part-by-part order quantity calculation unit 130 is stored. In the management index calculation value storage unit 143, the value of the management index designated by the user calculated by the part-by-part order quantity calculation unit 130 is stored. In the embodiment, a part order amount of money is stored.

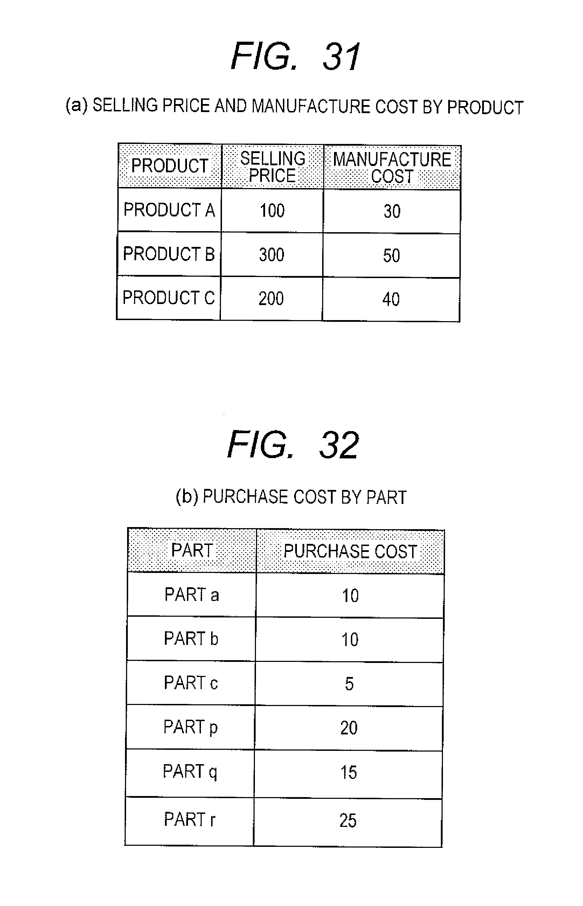

A part order quantity determining process realized by the part order quantity determination device 1000 will be described. The part order quantity determining process will be described using models shown in FIGS. 3, 4, 5, 6, 31, and 32 as targets. FIGS. 3 to 6 are similar to those in the first embodiment. As shown in FIG. 31, the selling price of the product A is 100, and the manufacture cost is 30. The selling price of the product B is 300, and the manufacture cost is 50. The selling price of the product C is 200, and the manufacture cost is 40. As shown in FIG. 32, the purchase cost of the part "a" is 10, that of the part "b" is 10, that of the part "c" is 5, that of the part "p" is 20, that of the part "q" is 15, and that of the part "r" is 25.

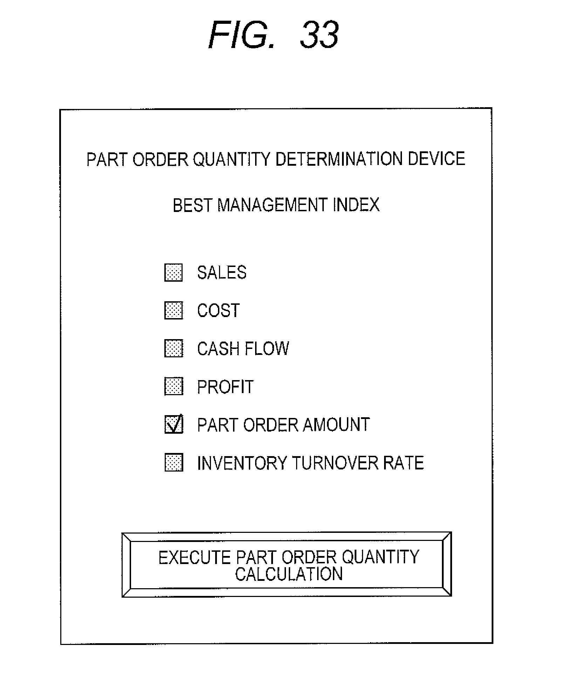

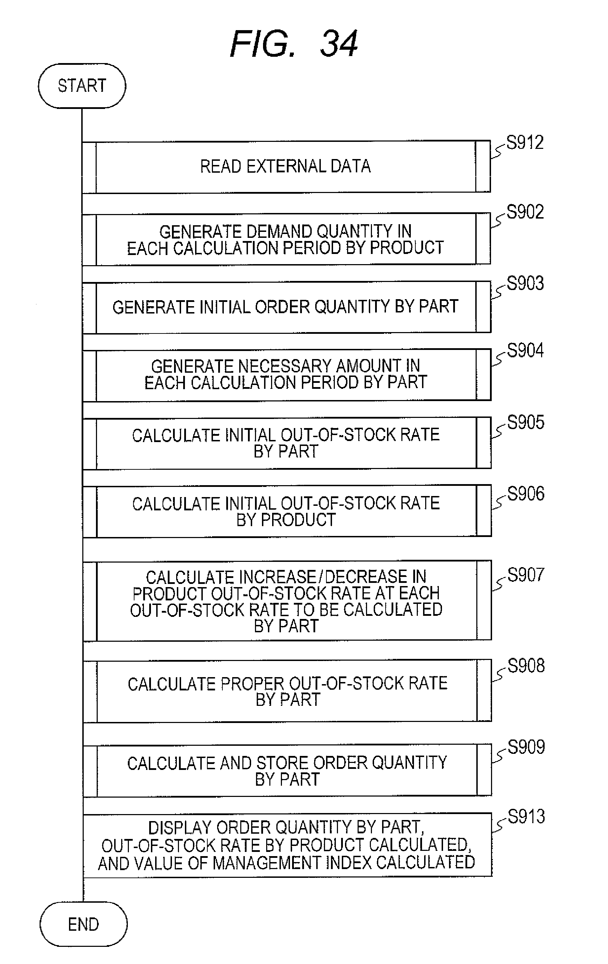

The screen shown in FIG. 33 is an example of a start screen displayed when the user starts a part order quantity determining process program by a predetermined operation. When the user clicks, to show intension of designation, a check box on the left side of the name of a best management index with an input device and selects a part order quantity calculation execution icon, the flow of part order quantity determining process of FIG. 34 starts.

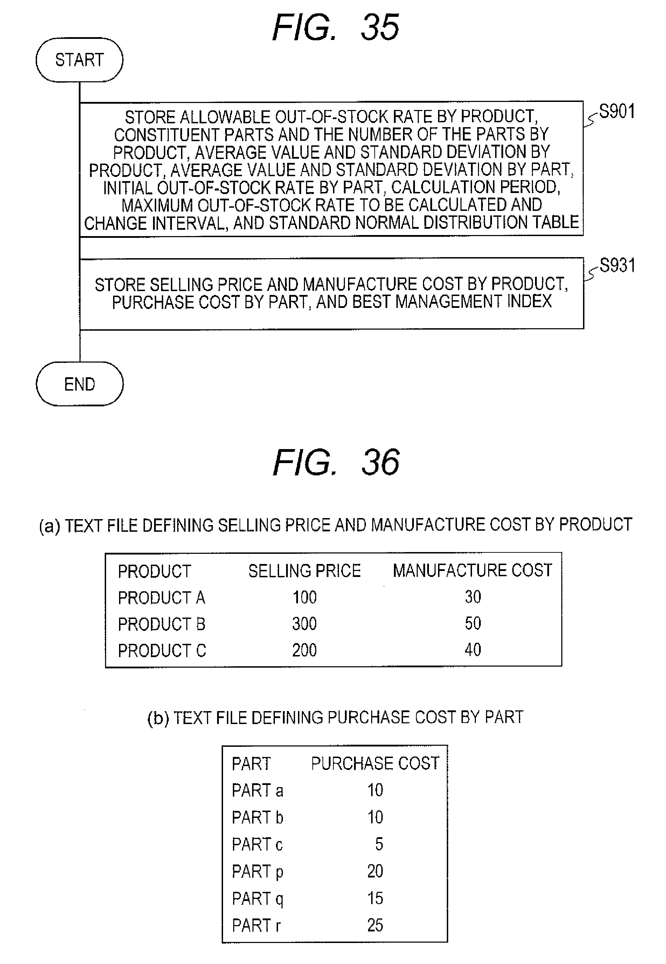

When the flow of the part order quantity determining process of FIG. 34 starts, the input unit 150 receives and stores data from the outside of the part order quantity determination device 1000 (S912). Description will be given with reference to FIG. 35. FIG. 35 is a flowchart showing the flow of process S912 of receiving and storing data. When the process S912 of receiving and storing data starts, the input unit 150 receives and stores the allowable out-of-stock rate by product, the constituent parts and the number of the parts by product, the average value and standard deviation of the demand quantity distribution by product, the average value and standard deviation of the order quantity distribution by part, the initial out-of-stock rate by part, the calculation period, the maximum value and change interval of the out-of-stock rate to be calculated, and the standard normal distribution table (S901).

Next, the input unit 150 receives and stores the selling price and manufacture cost of each product, purchase cost of each part, and the management index designated by the user (S931). Concretely, for example, the input unit 150 receives a text file including description of the selling price and manufacture cost of each product and the purchase cost of each part. The contents of the text files are described as shown in FIGS. 36(a) and 36(b). FIG. 36(a) shows the contents of a text file defining the selling price and manufacture cost of each product. FIG. 36(b) shows the contents of a text file defining the purchase cost of each part. Subsequently, the input unit 150 sequentially extracts the selling price and the manufacture cost of each product from the received text file of FIG. 36(a) and stores them in the product-by-product information storage unit 110. The input unit 150 sequentially extracts the purchase cost of each part from the received text file of FIG. 36(b) and stores it into the part-by-part information storage unit 113. The input unit 150 stores the management index designated in the screen shown in FIG. 33 into the management index information storage unit 115. Concretely, a character string "part order amount of money" into the management index information storage unit 115.

Referring again to FIG. 34, the description will be continued. Subsequently, in a manner similar to the first embodiment, the part order quantity determination device 1000 performs the process of generating the demand quantity in each calculation period product by product (S902), the process of generating the part-by-part initial order quantity (S903), the process of generating the necessary quantity in each calculation period part by part (S904), the part-by-part initial out-of-stock rate calculating process (S905), the product-by-product initial out-of-stock rate calculating process (S906), and the process of calculating the product out-of-stock rate at each of out-of-stock rates to be calculated part by part (S907).

Next, the part-by-part order information calculation unit 130 calculates a proper out-of-stock rate part by part in accordance with an optimization algorithm (S908). In the embodiment, in a manner similar to the first embodiment, to calculate the proper out-of-stock rate of each part, a model is formed as a mixed integer programming, and the proper out-of-stock rate is calculated by the branch and bound method. As constraint conditions of the embodiment, to the number of constraint conditions of one to three used in the first embodiment, a calculation formula for calculating the value of the management index designated by the user is added as a constraint condition. In addition, one objective function different from that of the first embodiment is provided.

As an example, the constraint formula which is added in the case where the user designates a part order amount of money will be described. The part order amount of money is calculated by calculating a value obtained by multiplying the order quantity with purchase cost part by part and adding the values on all of parts. When the purchase cost of the parts "parts" is expressed by a constant $PartsCost_{parts}$ and the part order quantity in the out-of-stock rate prob to be calculated of the parts "parts" is expressed as $Q_{parts,prob}$, parts order amount buyingCost$_{parts}$ is expressed by the following formula.

$$buyingCost_{parts} = PartsCost_{parts} \times \sum_{prob \in PROB} \left( Q_{parts,prob} \times flagOutOfStock_{parts,prob} \right)$$

... Formula 8

Next, an objective function will be defined. The objective function is defined so that the value of the management index designated by the user is minimized. In the case of a management index which is best to be maximized such as profit or sales amount, an objective function is obtained by multiplying the value of the management index with -1. In the case where the user designates the part order amount of money, it is expressed by the following formula.

$$\min \sum_{parts \in PARTS} buyingCost_{parts}$$

... Formula 9

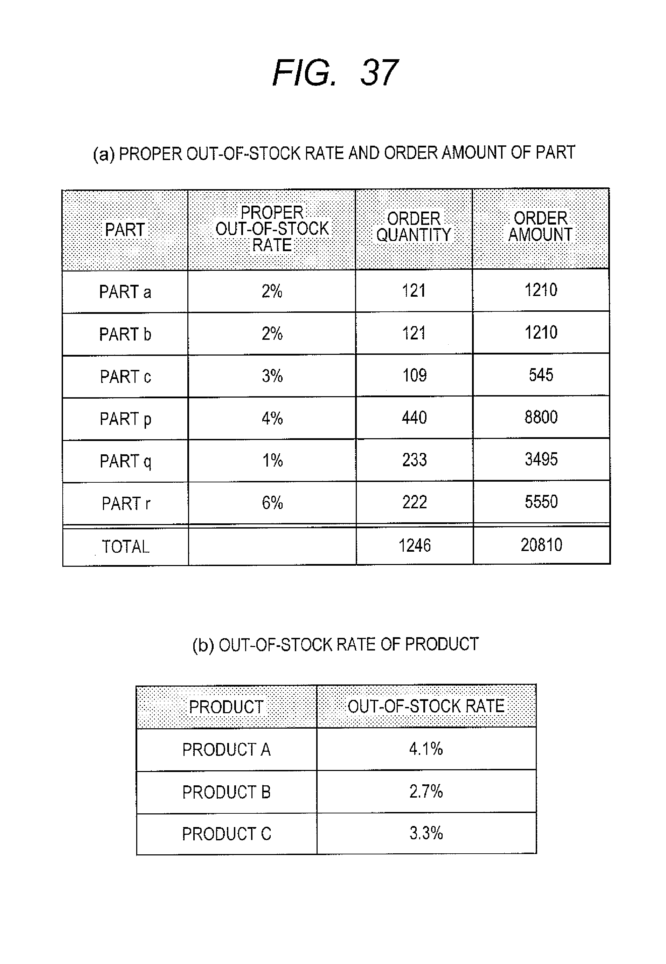

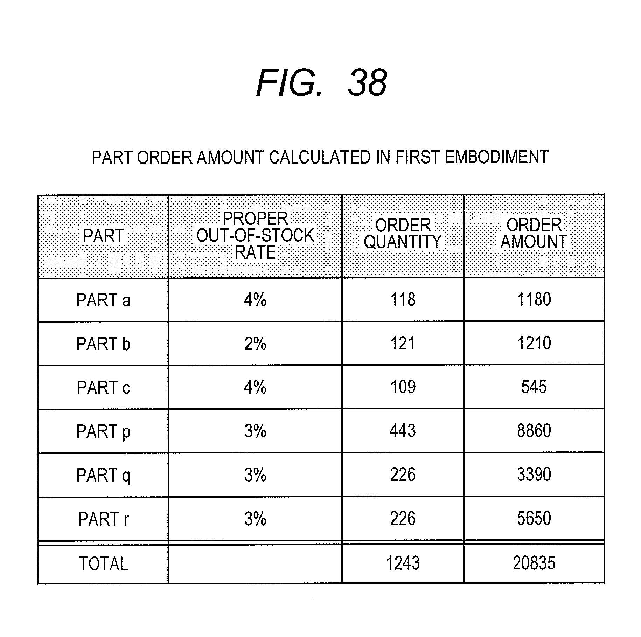

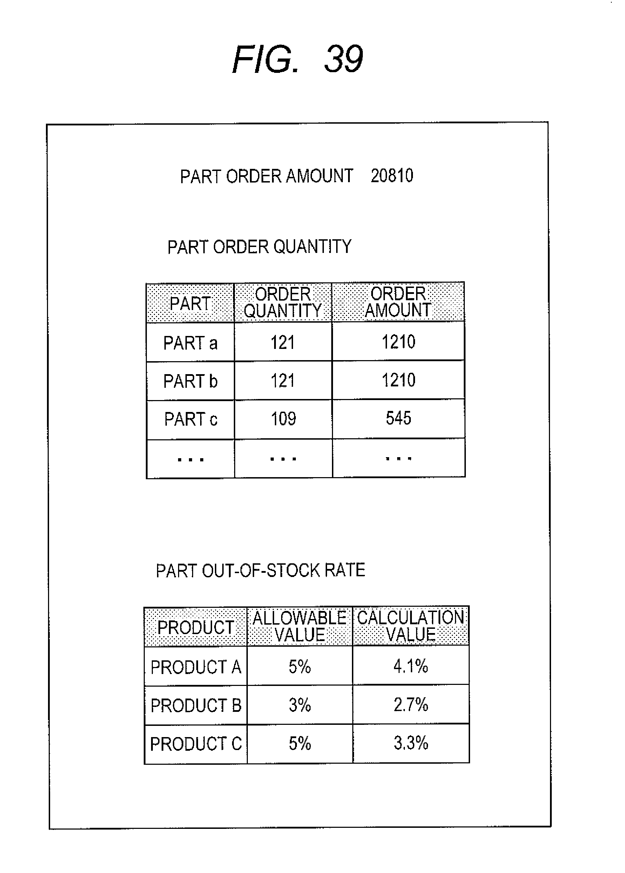

Subsequently, according to the branch and bound method as a solution of the mixed integer programming, the proper out-of-stock rate of each part which satisfies the constraint and at which the out-of-stock rate for each product becomes closest to the allowable out-of-stock rate is calculated (S9082). In this case, as shown in FIG. 37(a), the proper out-of-stock rate of the part "a" is 2%, that of the part "b" is 2%, that of the part "c" is 3%, that of the part "p" is 4%, that of the part "q" is 1%, and that of the part "r" is 6%. The order quantities of the parts a, b, c, p, q, and r are 121, 121, 109, 440, 233, and 222, respectively. The part order amount of money calculated by multiplying the order quantity with the purchase cost of the part "a" is 1210, that of the part "b" is 1210, that of the part "c" is 545, that of the part "p" is 8800, that of the part "q" is 3495, and that of the part "r" is 5550, and the total part order amount is 20810.
At this time, the out-of-stock rate of the product A is 4.1%, that of the product B is 2.7%, and that of the product C is 3.3%, and any of the products does not exceed the allowable out-of-stock rate.
For the part order quantity calculated in the first embodiment for reference, the part order amount is obtained. As shown in FIG. 38, the part order amount calculated in the first embodiment of the part "a" is 1180, that of the part "b" is 1210, that of the part "c" is 545, that of the part "p" is 8860, that of the part "q" is 3390, and that of the part "r" is 5650, and the total part order amount is 20835. That is, it can be confirmed that the part order amount calculated in the second embodiment is smaller.
The order quantity and the order amount of each part calculated are stored into the part-by-part order information storage unit 140, and the calculated out-of-stock rate of each product is stored in the product-by-product out-of-stock rate calculation value storage unit 142. The calculated value of the management index is stored in the management index calculation value storage unit 143.
Referring again to FIG. 34, the description will be continued. The order quantity and the order amount of each part stored in the part-by-part order information storage unit 140, the out-of-stock rate of each product stored in the product-by-product out-of-stock rate calculation value storage unit 142, and the value of the management index stored in the management index calculation value storage unit 143 are displayed to the user via the display unit 151 (S913) .
Concretely, the display unit 151 obtains the order quantity and the order amount of each part from the part-by-part order information storage unit 140, obtains the out-of-stock rate of each product from the product-by-product out-of-stock rate calculation value storage unit 142, and obtains the allowable out-of-stock rate of each product from the product-by-product information storage unit 110. The display unit 151 obtains the value of the management index stored in the management index calculation value storage unit 143. The display unit 151 displays the obtained values in a display such as a CRT as shown in FIG. 39, or may transmit them to an external computer via a communication unit (not shown). After that, the flow of FIG. 34 is finished. In such a manner, the part order quantity determining process is executed.

The second embodiment of the present invention has been described. Obviously, many alternatives, alternations, and modifications are possible. Therefore, the foregoing embodiments are intended to illustratively describe the gist and the range of the present invention and do not limit them.

For example, in the foregoing embodiments, the order quantity distribution of each part is received by the input unit. Alternatively, the order quantity distribution of each part may be calculated by adding a demand quantity distribution of each product used. Although it is assumed that the demand quantity distribution of each product follows the normal distribution, it may follow a gamma distribution. It is also possible to accept parts procurement leadtime of each part and, at the time of calculating the part necessary quantity for each product, set the part necessary quantity in a period before the demand date of the product only by the parts procurement leadtime. Although the average value and the standard deviation of the order quantity distribution of each part and the proper out-of-stock rate are used at the time of determining the order quantity, in place of the average value of the order quantity distribution, the necessary quantity of the part in the period may be used. Although the branch and bound method is used as the algorithm of calculating the proper out-of-stock rate, a method of approximately obtaining the optimum solution such as the genetic algorithm may be used. Although the part order amount is used as the management index designated by the user, sales amount, cost price, cash flow, profit, inventory turnover rate, or the like may be also used.

**Claims**

1. A part order quantity determination device for calculating order quantity of each part so that an out-of-stock rate of each product is closest to an allowable out-of-stock rate without exceeding the allowable out-of-stock rate, comprising:

   an input unit receiving initial information entered by a user and storing it into a storage unit;
   a first storage unit storing an allowable out-of-stock rate of each product;
   a second storage unit storing constituent parts of each product and the number of the parts;
   a third storage unit storing an average value and a standard deviation of a demand quantity distribution of each product;
   a fourth storage unit storing an average value and a standard deviation of an order quantity distribution of each part and an initial out-of-stock rate;
   a fifth storage unit storing a calculation period, a maximum value and a change interval of an out-of-stock rate to be calculated, and a standard normal distribution table;
   a part-by-part order information calculation unit calculating a demand quantity in each calculation period product by product from the average value and the standard deviation of the demand quantity distribution,
   calculating an initial order quantity part by part from the average value and the standard deviation of the order quantity distribution and the initial out-of-stock rate,
   calculating a necessary quantity in each calculation period part by part by multiplying the calculated demand quantity in each calculation period product by product with the number of constituent parts,
   calculating an initial excessive/insufficient quantity by subtracting the necessary quantity from the initial order quantity in each calculation period part by part and calculating an initial out-of-stock rate on all of parts,
   calculating the initial out-of-stock rate of each product on the basis of the initial excessive/insufficient quantity in each calculation period of each of parts used in each of products,
   setting an out-of-stock rate to be calculated for each part step by step, calculating an out-of-stock rate for each product as the initial out-of-stock rate for the other parts, and subtracting the initial out-of-stock rate of each product, thereby calculating a product out-of-stock rate increase/decrease amount at each out-of-stock rate part by part,
   generating a first constraint formula of the allowable out-of-stock rate of each product and the out-of-stock rate of each product, a second constraint formula of the out-of-stock rate of each product, the initial out-of-stock rate of each product, an increase/decrease amount of the product out-of-stock rate at each out-of-stock rate to be calculated part by part, and an out-of-stock rate flag, a third constraint formula on the out-of-stock rate flag, and an objective function which minimizes sum of a difference obtained by subtracting the out-of-stock rate from the allowable out-of-stock rate of each product,
   calculating a proper out-of-stock rate of each part by executing optimization calculation on the objective function, and calculating an order quantity part by part from the average value and the standard deviation of the order quantity distribution of the part and the proper out-of-stock rate of each part; and
   a display unit displaying the order quantity of each part.

2. A part order quantity determination device for calculating order quantity part by part at which value of a management index designated by the user is best in a range where an out-of-stock rate of each product does not exceed an allowable out-of-stock rate, comprising:

an input unit receiving initial information entered by a user and storing it into a storage unit;
a first storage unit storing an allowable out-of-stock rate, selling price, and manufacture cost of each product;
a second storage unit storing constituent parts of each product and the number of the parts;
a third storage unit storing an average value and a standard deviation of a demand quantity distribution of each product;
a fourth storage unit storing an average value and a standard deviation of an order quantity distribution of each part, purchase cost, and an initial out-of-stock rate;
a fifth storage unit storing a calculation period, a maximum value and a change interval of an out-of-stock rate to be calculated, and a standard normal distribution table;
a sixth storage unit storing name of a management index designated by the user;
a part-by-part order information calculation unit calculating a demand quantity in each calculation period product by product from the average value and the standard deviation of the demand quantity distribution,
calculating an initial order quantity part by part from the average value and the standard deviation of the order quantity distribution and the initial out-of-stock rate,
calculating a necessary quantity in each calculation period part by part by multiplying the calculated demand quantity in each calculation period product by product with the number of constituent parts,
calculating an initial excessive/insufficient quantity by subtracting the necessary quantity from the initial order quantity in each calculation period part by part and calculating an initial out-of-stock rate on all of parts,
calculating the initial out-of-stock rate of each product on the basis of the initial excessive/insufficient quantity in each calculation period of each of parts used in each of products product by product,
setting an out-of-stock rate to be calculated for each part step by step, calculating an out-of-stock rate for each product as the initial out-of-stock rate for the other parts, and subtracting the initial out-of-stock rate of each product, thereby calculating a product out-of-stock rate increase/decrease amount at each out-of-stock rate to be calculated part by part,
generating a first constraint formula of the allowable out-of-stock rate of each product and the out-of-stock rate of each product, a second constraint formula of the out-of-stock rate of each product, the initial out-of-stock rate of each product, an increase/decrease amount of the product out-of-stock rate at each out-of-stock rate to be calculated part by part, and an out-of-stock rate flag, a third constraint formula on the out-of-stock rate flag, a fourth constraint formula calculating a management index value designated by the user, and an objective function which minimizes or maximizes the management index value designed by the user, calculating a proper out-of-stock rate of each part by executing optimization calculation on the objective function, and
calculating an order quantity part by part from the average value and the standard deviation of the order quantity distribution of the part and the proper out-of-stock rate of each part and calculating the management index value; and
a display unit displaying the order quantity of each part and the management index value.

3. The part order quantity determination device according to claim 1 or 2, wherein the part-by-part order information calculation unit calculates information of an order quantity distribution of each part by adding a demand quantity distribution of each product stored in the third storage unit, and stores the information into the fourth storage unit.

4. The part order quantity determination device according to claim 1 or 2, wherein the information of the demand quantity distribution of each product, which is stored in the third storage unit and read, is generated in a format according to a gamma distribution.

5. The part order quantity determination device according to claim 1 or 2, wherein the input unit also receives parts procurement leadtime and
the part-by-part order information calculation unit calculates, in a process of calculating necessary quantity for each part in each calculation period by multiplying the calculated demand quantity in each calculation period for each product with the number of constituent parts, the part necessary quantity in a period before demand date of the product only by a parts procurement leadtime period.

6. The part order quantity determination device according to claim 1 or 2, wherein the part-by-part order information calculation unit uses, in a process of calculating order quantity for each part from the average value and the standard deviation of the order quantity distribution of the part and the proper out-of-stock rate of each part, necessary quantity of parts in the period in place of an average value of the order quantity distribution.

7. The part order quantity determination device according to claim 1 or 2, wherein the part-by-part order information calculation unit executes a branch and bound method, a genetic algorithm, or a method of approximately obtaining optimum solution as an algorithm of calculating the proper out-of-stock rate of each part by executing optimization calculation on the objective function.

8. The part order quantity determination device according to claim 2, wherein a management index designated by the user is part order amount, sales amount, cost price, cash flow, profit, or inventory turnover rate.

9. A part order quantity determination program for making a computer realize a function of calculating order quantity of each part so that an out-of-stock rate of each product is closest to an allowable out-of-stock rate without exceeding the allowable out-of-stock rate, wherein
an input unit receives, as initial information entered by a user, an allowable out-of-stock rate of each product, constituent parts of each product and the number of the parts, an average value and a standard deviation of a demand quantity distribution of each product, an average value and a standard deviation of an order quantity distribution of each part, an initial out-of-stock rate, a calculation period, a maximum value and a change interval of an out-of-stock rate to be calculated, and a standard normal distribution table, and stores them into storage units,
a calculation unit calculates a demand quantity in each calculation period product by product from the average value and the standard deviation of the demand quantity distribution,
calculates an initial order quantity part by part from the average value and the standard deviation of the order quantity distribution and the initial out-of-stock rate,
calculates a necessary quantity in each calculation period part by part by multiplying the calculated demand quantity in each calculation period product by product with the number of constituent parts,
calculates an initial excessive/insufficient quantity by subtracting the necessary quantity from the initial order quantity in each calculation period part by part and calculates an initial out-of-stock rate on all of parts,
calculates the initial out-of-stock rate of each product on the basis of the initial excessive/insufficient quantity in each calculation period of each of parts used in each of products,
sets an out-of-stock rate to be calculated for each part step by step, calculates an out-of-stock rate for each product as the initial out-of-stock rate for the other parts, and subtracts the initial out-of-stock rate of each product, thereby calculating a product out-of-stock rate increase/decrease amount at each out-of-stock rate to be calculated part by part,
generates a first constraint formula of the allowable out-of-stock rate of each product and the out-of-stock rate of each product, a second constraint formula of the out-of-stock rate of each product, the initial out-of-stock rate of each product, an increase/decrease amount of the product out-of-stock rate at each out-of-stock rate to be calculated part by part, and an out-of-stock rate flag, a third constraint formula on the out-of-stock rate flag, and an objective function which minimizes sum of a difference obtained by subtracting the out-of-stock rate from the allowable out-of-stock rate of each product,
calculates a proper out-of-stock rate of each part by executing optimization calculation on the objective function, and calculates an order quantity part by part from the average value and the standard deviation of the order quantity distribution of the part and the proper out-of-stock rate of each part, and
a display unit makes the computer execute each procedure of displaying the order quantity of each part.

10. A part order quantity determination program for making a computer realize a function of calculating order quantity of each part, at which value of a management index designated by the user is best in a range where an out-of-stock rate of each product does not exceed an allowable out-of-stock rate, wherein
an input unit receives, as initial information entered by a user, an allowable out-of-stock rate of each product, constituent parts of each product and the number of the parts, an average value and a standard deviation of a demand quantity distribution of each product, an average value and a standard deviation of an order quantity distribution of each part, an initial out-of-stock rate, a calculation period, a maximum value and a change interval of an out-of-stock rate to be calculated, a standard normal distribution table, and name of a management index designated by the user and stores them into a storage unit,
a calculation unit calculates a demand quantity in each calculation period product by product from the average value and the standard deviation of the demand quantity distribution,
calculates an initial order quantity part by part from the average value and the standard deviation of the order quantity distribution and the initial out-of-stock rate,
calculates a necessary quantity in each calculation period part by part by multiplying the calculated demand quantity in each calculation period product by product with the number of constituent parts,
calculates an initial excessive/insufficient quantity by subtracting the necessary quantity from the initial order quantity in each calculation period part by part and calculates an initial out-of-stock rate on all of parts,

calculates the initial out-of-stock rate of each product on the basis of the initial excessive/insufficient quantity in each calculation period of each of parts used in each of products,

sets an out-of-stock rate to be calculated for each part step by step, calculates an out-of-stock rate for each product as the initial out-of-stock rate for the other parts, and calculates a product out-of-stock rate increase/decrease amount at each out-of-stock rate to be calculated part by part by subtraction of the initial out-of-stock rate of each product, generates a first constraint formula of the allowable out-of-stock rate of each product and the out-of-stock rate of each product, a second constraint formula of the out-of-stock rate of each product, the initial out-of-stock rate of each product, an increase/decrease amount of the product out-of-stock rate at each out-of-stock rate to be calculated part by part, and an out-of-stock rate flag, a third constraint formula on the out-of-stock rate flag, a fourth constraint formula calculating a management index value designated by the user, and an objective function which minimizes or maximizes the management index value designed by the user,

calculates a proper out-of-stock rate of each part by executing optimization calculation on the objective function, and calculates an order quantity part by part from the average value and the standard deviation of the order quantity distribution of the part and the proper out-of-stock rate of each part and calculates the management index value, and a display unit makes the computer execute a procedure of displaying the order quantity of each part and the management index value.

11. The part order quantity determination program according to claim 9 or 10, wherein the calculation unit calculates information of an order quantity distribution of each part by adding a demand quantity distribution of each product stored in the storage unit, and stores the information into the fourth storage unit.

12. The part order quantity determination program according to claim 9 or 10, wherein the information of the demand quantity distribution of each product, which is stored in the storage unit and read, is generated in a format according to a gamma distribution.

13. The part order quantity determination program according to claim 9 or 10, wherein the input unit also receives parts procurement leadtime and

the calculation unit calculates, in a process of calculating necessary quantity for each part in each calculation period by multiplying the calculated demand quantity in each calculation period for each product with the number of constituent parts, the part necessary quantity in a period before demand date of the product only by a parts procurement leadtime period.

14. The part order quantity determination program according to claim 9 or 10, wherein the calculation unit uses, in a process of calculating order quantity for each part from the average value and the standard deviation of the order quantity distribution of the part and the proper out-of-stock rate of each part, necessary quantity of parts in the period in place of an average value of the order quantity distribution.

15. The part order quantity determination program according to claim 9 or 10, wherein the calculation unit executes a branch and bound method, a genetic algorithm, or a method of approximately obtaining optimum solution as an algorithm of calculating the proper out-of-stock rate of each part by executing optimization calculation on the objective function.

16. The part order quantity determination program according to claim 10, wherein a management index designated by the user is part order amount, sales amount, cost price, cash flow, profit, or inventory turnover rate.

# FIG. 1

**100**

PART ORDER QUANTITY DETERMINATION DEVICE

**114** SYSTEM INFORMATION STORAGE UNIT

**113** PART-BY-PART INFORMATION STORAGE UNIT

**110** PRODUCT-BY-PRODUCT INFORMATION STORAGE UNIT

**111** PART CONFIGURATION INFORMATION STORAGE UNIT

**112** PRODUCT-BY-PRODUCT DEMAND QUANTITY DISTRIBUTION STORAGE UNIT

**130** PART-BY-PART ORDER INFORMATION CALCULATION UNIT

**140** PART-BY-PART ORDER INFORMATION STORAGE UNIT

**150** INPUT UNIT

**151** DISPLAY UNIT

# FIG. 2

100

## PART ORDER QUANTITY DETERMINATION DEVICE

| 201 | 210 | 220 | 230 |
|---|---|---|---|
| CPU | RAM | ROM | AUXILIARY STORAGE DEVICE |

| 240 | 250 | 260 |
|---|---|---|
| DISPLAY DEVICE | INPUT DEVICE | MEDIA READING DEVICE |

# FIG. 3

| PRODUCT | PART | THE NUMBER OF PARTS |
|---|---|---|
| PRODUCT A | PART a | 1 |
| PRODUCT A | PART p | 1 |
| PRODUCT A | PART q | 1 |
| PRODUCT A | PART r | 1 |
| PRODUCT B | PART b | 1 |
| PRODUCT B | PART p | 2 |
| PRODUCT B | PART q | 1 |
| PRODUCT C | PART c | 1 |
| PRODUCT C | PART p | 1 |
| PRODUCT C | PART r | 1 |

# FIG. 4

## (a) PRODUCT-BY-PRODUCT DEMAND QUANTITY DISTRIBUTION

| PRODUCT | AVERAGE VALUE | STANDARD DEVIATION |
|---------|---------------|--------------------|
| PRODUCT A | 100 | 10 |
| PRODUCT B | 100 | 10 |
| PRODUCT C | 100 | 5 |

## (b) ALLOWABLE OUT-OF-STOCK RATE BY PRODUCTS

| PRODUCT | ALLOWABLE OUT-OF-STOCK RATE |
|---------|------------------------------|
| PRODUCT A | 5% |
| PRODUCT B | 3% |
| PRODUCT C | 5% |

# FIG. 5

## (a) PART-BY-PART ORDER QUANTITY DISTRIBUTION

| PART | AVERAGE VALUE | STANDARD DEVIATION | INITIAL OUT-OF-STOCK RATE |
|------|---------------|--------------------|--------------------------|
| PART a | 100 | 10 | 5% |
| PART b | 100 | 10 | 3% |
| PART c | 100 | 5 | 5% |
| PART p | 400 | 23 | 4% |
| PART q | 200 | 14 | 4% |
| PART r | 200 | 14 | 4% |

## (b) INITIAL OUT-OF-STOCK RATE BY PARTS

| PART | INITIAL OUT-OF-STOCK RATE |
|------|---------------------------|
| PART a | 5% |
| PART b | 3% |
| PART c | 5% |
| PART p | 4% |
| PART q | 4% |
| PART r | 4% |

# FIG. 6

(a) CALCULATION PERIOD

| CALCULATION PERIOD |
|---|
| 30 |

(b) OUT-OF-STOCK RATE TO BE CALCULATED

| MAXIMUM OUT-OF-STOCK RATE | OUT-OF-STOCK RATE CHANGE INTERVAL |
|---|---|
| 5% | 1% |

(c) STANDARD NORMAL DISTRIBUTION TABLE

| STANDARD NORMAL DISTRIBUTION CUMULATIVE VALUE | VALUE |
|---|---|
| 99% | 2.33 |
| 98% | 2.05 |
| 97% | 1.88 |
| 96% | 1.75 |
| 95% | 1.64 |
| . . . | . . . |

# FIG. 7

800

PART ORDER QUANTITY
DETERMINATION DEVICE

PART ORDER QUANTITY
CALCULATION EXECUTION

# FIG. 8

START

STORE ALLOWABLE OUT-OF-STOCK RATE BY PRODUCT, CONSTITUENT PARTS AND THE NUMBER OF THE PARTS BY PRODUCT, AVERAGE VALUE AND STANDARD DEVIATION BY PRODUCT, AVERAGE VALUE AND STANDARD DEVIATION BY PART, INITIAL OUT-OF-STOCK RATE BY PART, CALCULATION PERIOD, MAXIMUM VALUE AND CHANGE INTERVAL OF OUT-OF-STOCK RATE TO BE CALCULATED, AND STANDARD NORMAL DISTRIBUTION TABLE — S901

GENERATE DEMAND QUANTITY BY CALCULATION PERIOD BY PRODUCT — S902

GENERATE INITIAL ORDER QUANTITY BY PART — S903

GENERATE NECESSARY QUANTITY IN EACH CALCULATION PERIOD BY PART — S904

CALCULATE OUT-OF-STOCK RATE BY PART — S905

CALCULATE INITIAL OUT-OF-STOCK RATE BY PRODUCT — S906

CALCULATE INCREASE/DECREASE IN PRODUCT OUT-OF-STOCK RATE AT EACH OF OUT-OF-STOCK RATES TO BE CALCULATED BY PART — S907

CALCULATE PROPER OUT-OF-STOCK RATE BY PRODUCT — S908

CALCULATE AND STORE ORDER QUANTITY BY PART — S909

DISPLAY ORDER QUANTITY BY PART — S910

END

27

# FIG. 9

(a) TEXT FILE DEFINING ALLOWABLE OUT-OF-STOCK RATE BY PRODUCT

| PRODUCT | ALLOWABLE OUT-OF-STOCK RATE |
|---|---|
| PRODUCT A | 5 |
| PRODUCT B | 3 |
| PRODUCT C | 5 |

(b) TEXT FILE DEFINING CONSTITUENT PARTS AND THE NUMBER OF PARTS BY PRODUCT

| PRODUCT | PART | THE NUMBER OF PARTS |
|---|---|---|
| PRODUCT A | PART a | 1 |
| PRODUCT A | PART p | 1 |
| PRODUCT A | PART q | 1 |
| PRODUCT A | PART r | 1 |
| PRODUCT B | PART b | 1 |
| PRODUCT B | PART p | 2 |
| ... | | |

(c) TEXT FILE DEFINING DEMAND DISTRIBUTION BY PRODUCT

| PRODUCT | AVERAGE VALUE | STANDARD DEVIATION |
|---|---|---|
| PRODUCT A | 100 | 10 |
| PRODUCT B | 100 | 10 |
| PRODUCT C | 100 | 5 |

(d) TEXT FILE DEFINING ORDER QUANTITY DISTRIBUTION BY PART

| PART | AVERAGE VALUE | STANDARD DEVIATION |
|---|---|---|
| PART a | 100 | 10 |
| PART b | 100 | 10 |
| PART c | 100 | 5 |
| PART p | 400 | 23 |
| PART q | 200 | 14 |
| PART r | 200 | 14 |

# FIG. 10

(a) TEXT FILE DEFINING INITIAL OUT-OF-STOCK RATE BY PART

| PART | INITIAL OUT-OF-STOCK RATE |
|------|---------------------------|
| PART a | 5% |
| PART b | 3% |
| PART c | 5% |
| PART p | 4% |
| PART q | 4% |
| PART r | 4% |

(b) TEXT FILE DEFINING CALCULATION PERIOD

| CALCULATION PERIOD | 30 |
|--------------------|----|

(c) TEXT FILE DEFINING OUT-OF-STOCK TO BE CALCULATED

| MAXIMUM OUT-OF-STOCK RATE | OUT-OF-STOCK RATE INTERVAL |
|---------------------------|----------------------------|
| 5% | 1% |

(d) TEXT FILE DEFINING STANDARD NORMAL DISTRIBUTION

| STANDARD NORMAL DISTRIBUTION CUMULATIVE VALUE | VALUE |
|-----------------------------------------------|-------|
| 99% | 2.33 |
| 98% | 2.05 |
| 97% | 1.88 |
| 96% | 1.75 |
| . . . | |

# *FIG. 11*

```
   ┌─────────┐
   │  START  │
   └─────────┘
        │
        │   ┌──────────────────────────────────────┐ ⟋S9021
        │   │        EXTRACT DEMAND QUANTITY        │
        │   │     DISTRIBUTION OF TARGET PRODUCT    │
        │   └──────────────────────────────────────┘
        │
        │   ┌──┬───────────────────────────────┬──┐
        │   │  │      EACH CALCULATION PERIOD  │  │
        │   └──┴───────────────────────────────┴──┘
        │
   ┌─────────┐
   │   END   │
   └─────────┘
                 ┌──────────────────────────────────────┐ ⟋S9022
                 │    GENERATE PSEUDO DEMAND QUANTITY     │
                 │        OCCURRENCE PROBABILITY          │
                 └──────────────────────────────────────┘
                 ┌──────────────────────────────────────┐ ⟋S9023
                 │         RETRIEVE VALUE FROM            │
                 │   STANDARD NORMAL DISTRIBUTION TABLE   │
                 └──────────────────────────────────────┘
                 ┌──────────────────────────────────────┐ ⟋S9024
                 │   CALCULATE DEMAND QUANTITY FROM       │
                 │   RETRIEVED VALUE, AVERAGE VALUE,      │
                 │        AND STANDARD DEVIATION          │
                 └──────────────────────────────────────┘
```

# FIG. 12

(a) DEMAND QUANTITY DISTRIBUTION OF PRODUCT A

| PRODUCT | AVERAGE VALUE | STANDARD DEVIATION |
|---|---|---|
| PRODUCT A | 100 | 10 |

(b) OCCURRENCE PROBABILITY OF PRODUCT A IN PERIOD 1

| PRODUCT | OCCURRENCE PROBABILITY | RETRIEVED VALUE |
|---|---|---|
| PRODUCT A | 97% | 1.88 |

(c) DEMAND QUANTITY OF PRODUCT A

| PRODUCT | CALCULATION PERIOD | DEMAND QUANTITY |
|---|---|---|
| PRODUCT A | 1 | 119 |
| PRODUCT A | 2 | 107 |
| PRODUCT A | 3 | 98 |
| . . . | . . . | . . . |

# FIG. 13

```
START
   │
   ├─────────────────────────────────────────────┐
   │  EXTRACT ORDER QUANTITY DISTRIBUTION         │  S9031
   │            OF TARGET PART                    │
   ├─────────────────────────────────────────────┤
   │  EXTRACT INITIAL OUT-OF-STOCK RATE           │  S9032
   │            OF TARGET PART                    │
   ├─────────────────────────────────────────────┤
   │            RETRIEVE VALUE FROM               │  S9033
   │  STANDARD NORMAL DISTRIBUTION TABLE          │
   ├─────────────────────────────────────────────┤
   │  CALCULATE INITIAL ORDER QUANTITY FROM       │  S9034
   │  RETRIEVED VALUE, AVERAGE VALUE, AND         │
   │            STANDARD DEVIATION                │
   │
END
```

# FIG. 14

(a) ORDER QUANTITY DISTRIBUTION OF PART p

| PART | AVERAGE VALUE | STANDARD DEVIATION |
|---|---|---|
| PART p | 400 | 23 |

(b) INITIAL OUT-OF-STOCK RATE OF PART p

| PART | INITIAL OUT-OF-STOCK RATE |
|---|---|
| PART p | 4% |

(c) RETRIEVED VALUE OF STANDARD NORMAL DISTRIBUTION OF PART p

| PART | RETRIEVED VALUE |
|---|---|
| PART p | 1.75 |

(d) INITIAL ORDER QUANTITY OF PART p

| PART | INITIAL ORDER QUANTITY |
|---|---|
| PART p | 440 |

# FIG. 15

START

EXTRACT PRODUCT USING TARGET PART
AND THE NUMBER OF PARTS ⟨S9041

EACH CALCULATION PERIOD

EXTRACT DEMAND QUANTITY OF
TARGET PRODUCT ⟨S9042

END

CALCULATE NECESSARY QUANTITY OF
PARTS BY PRODUCT ⟨S9043

CALCULATE NECESSARY QUANTITY OF
PARTS AS A WHOLE BY ADDING NECESSARY
QUANTITIES OF PARTS OF PRODUCTS ⟨S9044

# FIG. 16

(a) PRODUCT USING PART p AND THE NUMBER OF PARTS

| PRODUCT | PART | THE NUMBER OF PARTS |
|---------|------|---------------------|
| PRODUCT A | PART p | 1 |
| PRODUCT B | PART p | 2 |
| PRODUCT C | PART p | 1 |

(b) NECESSARY QUANTITY OF PARTS p OF EACH PRODUCT IN CALCULATION PERIOD 1

| CALCULATION PERIOD | PRODUCT | DEMAND QUANTITY | NECESSARY QUANTITY BY PRODUCT |
|--------------------|---------|-----------------|-------------------------------|
| 1 | PRODUCT A | 119 | 119 |
| 1 | PRODUCT B | 93 | 186 |
| 1 | PRODUCT C | 105 | 105 |

(c) NECESSARY QUANTITY OF PARTS p IN CALCULATION PERIOD 1

| PART | CALCULATION PERIOD | NECESSARY QUANTITY |
|------|--------------------|--------------------|
| PART p | 1 | 410 |

# FIG. 17

START

EXTRACT ORDER QUANTITY OF TARGET PART — S9051

EXTRACT NECESSARY QUANTITY IN
CALCULATION PERIOD OF TARGET PART — S9052

CALCULATE THE EXCESSIVE/INSUFFICIENT QUANTITY
BY SUBTRACTING NECESSARY QUANTITY FROM
ORDER QUANTITY OF TARGET PART — S9053

CALCULATED
QUANTITY > 0?          NO

END

ADD (1/CALCULATION PERIOD) TO
INSUFFICIENT RATE OF TARGET PART — S9054

# FIG. 18

INITIAL EXCESSIVE/INSUFFICIENT QUANTITY OF PART p

| PART | CALCULATION PERIOD | INITIAL EXCESSIVE/ INSUFFICIENT QUANTITY |
|------|--------------------|------------------------------------------|
| PART p | 1 | 30 |

# FIG. 19

START

EXTRACT PART USING
TARGET PRODUCT — S9061

EACH CALCULATION PERIOD

EXTRACT EXCESSIVE/
INSUFFICIENT QUANTITY
OF PARTS USED — S9062

END

EXCESSIVE/INSUFFICIENT
QUANTITY > 0
ON EACH OF PARTS? NO

NO

ADD
(1/CALCULATION PERIOD)
TO OUT-OF-STOCK RATE
OF TARGET PRODUCT — S9063

EXCESSIVE/INSUFFICIENT
QUANTITY > 0 ON EACH
OF DEDICATED PART?

YES

ADD (1/CALCULATION PERIOD) ×
(1/THE NUMBER OF PRODUCTS
USING COMMON PART WHICH
IS OUT OF STOCK) TO
OUT-OF-STOCK RATE — S9064

# FIG. 20

## (a) PART USING PRODUCT A AND THE NUMBER OF PARTS

| PART | THE NUMBER OF PARTS |
|------|---------------------|
| PART a | 1 |
| PART p | 1 |
| PART q | 1 |
| PART r | 1 |

## (b) INITIAL EXCESSIVE / INSUFFICIENT QUANTITY IN CALCULATION PERIOD 1 OF PART USING PRODUCT A

| PART | EXCESSIVE / INSUFFICIENT QUANTITY |
|------|-----------------------------------|
| PART a | -3 |
| PART p | 30 |
| PART q | 25 |
| PART r | 13 |

## (c) INITIAL OUT-OF-STOCK RATE OF PRODUCT

| PRODUCT | OUT-OF-STOCK RATE | OUT-OF-STOCK RATE OF DEDICATED PART | OUT-OF-STOCK RATE OF COMMON PART |
|---------|-------------------|-------------------------------------|----------------------------------|
| PRODUCT A | 6.07% | 5.02% | 1.05% |
| PRODUCT B | 3.77% | 3.00% | 0.77% |
| PRODUCT C | 5.62% | 5.00% | 0.62% |

# FIG. 21

START

S9071
EXTRACT MAXIMUM OUT-OF-STOCK RATE AND
CHANGE INTERVAL OF PART TO BE CALCULATED

S9072
GENERATE OUT-OF-STOCK RATE OF
PART TO BE CALCULATED

BY PART AND BY OUT-OF-STOCK RATE
TO BE CALCULATED

S9073
SET OUT-OF-STOCK RATE OF PART

S9074
CALCULATE OUT-OF-STOCK RATE
BY PART

S9075
CALCULATE OUT-OF-STOCK RATE
BY PRODUCT

S9076
CALCULATE DIFFERENCE BETWEEN
OUT-OF-STOCK RATE BY PRODUCT AND
INITIAL OUT-OF-STOCK RATE

END

# FIG. 22

(a) OUT-OF-STOCK RATE TO BE CALCULATED

| OUT-OF-STOCK RATE OF PART |
|:---:|
| 5% |
| 4% |
| 3% |
| 2% |
| 1% |

(b) OUT-OF-STOCK RATE OF PART

| PART | OUT-OF-STOCK RATE |
|:---:|:---:|
| PART a | 5% |
| PART b | 3% |
| PART c | 5% |
| PART p | 5% |
| PART q | 4% |
| PART r | 4% |

# FIG. 23

(a) PRODUCT OUT-OF-STOCK RATE WHEN OUT-OF-STOCK RATE OF PART p IS 5%

| PRODUCT | OUT-OF-STOCK RATE | OUT-OF-STOCK RATE OF DEDICATED PART | OUT-OF-STOCK RATE OF COMMON PART |
|---|---|---|---|
| PRODUCT A | 6.19% | 5.02% | 1.17% |
| PRODUCT B | 3.89% | 3.00% | 0.89% |
| PRODUCT C | 5.75% | 5.00% | 0.75% |

(b) INCREASE/DECREASE IN OUT-OF-STOCK RATE
WHEN OUT-OF-STOCK RATE OF PART P IS 5%

| PRODUCT | INCREASE/DECREASE IN OUT-OF-STOCK RATE |
|---|---|
| PRODUCT A | 0.12% |
| PRODUCT B | 0.12% |
| PRODUCT C | 0.13% |

# FIG. 24

(a) SET PROD

| PROD |
|---|
| PRODUCT A |
| PRODUCT B |
| PRODUCT C |

(b) SET PARTS

| PARTS |
|---|
| PART a |
| PART b |
| PART c |
| PART p |
| PART q |
| PART r |

(c) SET PROB

| 5% | 4% | 3% | 2% | 1% |
|---|---|---|---|---|

# FIG. 25

## (a) CONSTANT ON PRODUCT

| PRODUCT | GoalprodOutOfStock | BaseOutOfStock |
|---------|--------------------|-----------------|
| PRODUCT A | 5% | 6.07 |
| PRODUCT B | 3% | 3.77 |
| PRODUCT C | 5% | 5.62 |

## (b) CONSTANT EXPRESSING INCREASE/DECREASE IN OUT-OF-STOCK RATE

| PART | PROPER OUT-OF-STOCK RATE | PRODUCT | DiffOutOfStock |
|------|--------------------------|---------|----------------|
| PART p | 5% | PRODUCT A | 0.12% |
| PART p | 5% | PRODUCT B | 0.12% |
| PART p | 5% | PRODUCT C | 0.13% |
| PART p | 3% | PRODUCT A | −0.09% |
| PART p | 3% | PRODUCT B | −0.08% |
| PART p | 3% | PRODUCT C | −0.08% |
| PART a | 4% | PRODUCT A | −0.85% |
| PART a | 4% | PRODUCT B | 0.10% |
| PART a | 4% | PRODUCT C | 0.15% |
| . . . | . . . | . . . | . . . |

# FIG. 26

```
        ┌─────────┐
        │  START  │
        └─────────┘
             │
┌────────────────────────────────────────┐  S9081
│ MAP INFORMATION USED FOR CALCULATION ON │
│  PRODUCT INFORMATION, PART INFORMATION, │
│ INCREASE/DECREASE IN OUT-OF-STOCK RATE, │
│              AND THE LIKE                │
└────────────────────────────────────────┘
             │
┌────────────────────────────────────────┐  S9082
│      EXECUTE OPTIMIZATION CALCULATION    │
└────────────────────────────────────────┘
             │
        ┌─────────┐
        │   END   │
        └─────────┘
```

# FIG. 27

(a) PROPER OUT-OF-STOCK RATE OF PART

| PART | PROPER OUT-OF-STOCK RATE |
|------|--------------------------|
| PART a | 4% |
| PART b | 2% |
| PART c | 4% |
| PART p | 3% |
| PART q | 3% |
| PART r | 3% |

(b) OUT-OF-STOCK RATE OF PRODUCT

| PRODUCT | OUT-OF-STOCK RATE |
|---------|-------------------|
| PRODUCT A | 4.9% |
| PRODUCT B | 2.7% |
| PRODUCT C | 4.5% |

## FIG. 28

| PART | ORDER QUANTITY |
|---|---|
| PART a | 118 |
| PART b | 121 |
| PART c | 109 |
| PART p | 443 |
| PART q | 226 |
| PART r | 226 |

## FIG. 29

PART ORDER QUANTITY

| PART | ORDER QUANTITY |
|---|---|
| PART a | 118 |
| PART b | 121 |
| PART c | 109 |
| PART p | 443 |
| PART q | 226 |
| PART r | 226 |

# FIG. 30

1000

## PART ORDER QUANTITY DETERMINATION DEVICE

SYSTEM INFORMATION STORAGE UNIT — 114

PART-BY-PART INFORMATION STORAGE UNIT — 113

PRODUCT-BY-PRODUCT INFORMATION STORAGE UNIT — 110

PART CONFIGURATION INFORMATION STORAGE UNIT — 111

PRODUCT-BY-PRODUCT DEMAND QUANTITY DISTRIBUTION STORAGE UNIT — 112

MANAGEMENT INDEX INFORMATION STORAGE UNIT — 115

130

PART-BY-PART ORDER QUANTITY CALCULATION UNIT

PART-BY-PART ORDER INFORMATION STORAGE UNIT — 140

PRODUCT-BY-PRODUCT OUT-OF-STOCK RATE CALCULATION VALUE STORAGE UNIT — 142

MANAGEMENT INDEX CALCULATION VALUE STORAGE UNIT — 143

INPUT UNIT — 150

DISPLAY UNIT — 151

# FIG. 31

(a) SELLING PRICE AND MANUFACTURE COST BY PRODUCT

| PRODUCT | SELLING PRICE | MANUFACTURE COST |
|---|---|---|
| PRODUCT A | 100 | 30 |
| PRODUCT B | 300 | 50 |
| PRODUCT C | 200 | 40 |

# FIG. 32

(b) PURCHASE COST BY PART

| PART | PURCHASE COST |
|---|---|
| PART a | 10 |
| PART b | 10 |
| PART c | 5 |
| PART p | 20 |
| PART q | 15 |
| PART r | 25 |

# FIG. 33

PART ORDER QUANTITY DETERMINATION DEVICE

BEST MANAGEMENT INDEX

☐ SALES

☐ COST

☐ CASH FLOW

☐ PROFIT

☑ PART ORDER AMOUNT

☐ INVENTORY TURNOVER RATE

EXECUTE PART ORDER QUANTITY CALCULATION

# FIG. 34

START

READ EXTERNAL DATA — S912

GENERATE DEMAND QUANTITY IN EACH CALCULATION PERIOD BY PRODUCT — S902

GENERATE INITIAL ORDER QUANTITY BY PART — S903

GENERATE NECESSARY AMOUNT IN EACH CALCULATION PERIOD BY PART — S904

CALCULATE INITIAL OUT-OF-STOCK RATE BY PART — S905

CALCULATE INITIAL OUT-OF-STOCK RATE BY PRODUCT — S906

CALCULATE INCREASE/DECREASE IN PRODUCT OUT-OF-STOCK RATE AT EACH OUT-OF-STOCK RATE TO BE CALCULATED BY PART — S907

CALCULATE PROPER OUT-OF-STOCK RATE BY PART — S908

CALCULATE AND STORE ORDER QUANTITY BY PART — S909

DISPLAY ORDER QUANTITY BY PART, OUT-OF-STOCK RATE BY PRODUCT CALCULATED, AND VALUE OF MANAGEMENT INDEX CALCULATED — S913

END

# FIG. 35

START

STORE ALLOWABLE OUT-OF-STOCK RATE BY PRODUCT, CONSTITUENT PARTS AND THE NUMBER OF THE PARTS BY PRODUCT, AVERAGE VALUE AND STANDARD DEVIATION BY PRODUCT, AVERAGE VALUE AND STANDARD DEVIATION BY PART, INITIAL OUT-OF-STOCK RATE BY PART, CALCULATION PERIOD, MAXIMUM OUT-OF-STOCK RATE TO BE CALCULATED AND CHANGE INTERVAL, AND STANDARD NORMAL DISTRIBUTION TABLE ⟋S901

STORE SELLING PRICE AND MANUFACTURE COST BY PRODUCT, PURCHASE COST BY PART, AND BEST MANAGEMENT INDEX ⟋S931

END

# FIG. 36

(a) TEXT FILE DEFINING SELLING PRICE AND MANUFACTURE COST BY PRODUCT

| PRODUCT | SELLING PRICE | MANUFACTURE COST |
|---|---|---|
| PRODUCT A | 100 | 30 |
| PRODUCT B | 300 | 50 |
| PRODUCT C | 200 | 40 |

(b) TEXT FILE DEFINING PURCHASE COST BY PART

| PART | PURCHASE COST |
|---|---|
| PART a | 10 |
| PART b | 10 |
| PART c | 5 |
| PART p | 20 |
| PART q | 15 |
| PART r | 25 |

# FIG. 37

(a) PROPER OUT-OF-STOCK RATE AND ORDER AMOUNT OF PART

| PART | PROPER OUT-OF-STOCK RATE | ORDER QUANTITY | ORDER AMOUNT |
|---|---|---|---|
| PART a | 2% | 121 | 1210 |
| PART b | 2% | 121 | 1210 |
| PART c | 3% | 109 | 545 |
| PART p | 4% | 440 | 8800 |
| PART q | 1% | 233 | 3495 |
| PART r | 6% | 222 | 5550 |
| TOTAL | | 1246 | 20810 |

(b) OUT-OF-STOCK RATE OF PRODUCT

| PRODUCT | OUT-OF-STOCK RATE |
|---|---|
| PRODUCT A | 4.1% |
| PRODUCT B | 2.7% |
| PRODUCT C | 3.3% |

# FIG. 38

PART ORDER AMOUNT CALCULATED IN FIRST EMBODIMENT

| PART | PROPER OUT-OF-STOCK RATE | ORDER QUANTITY | ORDER AMOUNT |
|---|---|---|---|
| PART a | 4% | 118 | 1180 |
| PART b | 2% | 121 | 1210 |
| PART c | 4% | 109 | 545 |
| PART p | 3% | 443 | 8860 |
| PART q | 3% | 226 | 3390 |
| PART r | 3% | 226 | 5650 |
| TOTAL | | 1243 | 20835 |

# FIG. 39

PART ORDER AMOUNT   20810

PART ORDER QUANTITY

| PART | ORDER QUANTITY | ORDER AMOUNT |
|---|---|---|
| PART a | 121 | 1210 |
| PART b | 121 | 1210 |
| PART c | 109 | 545 |
| . . . | . . . | . . . |

PART OUT-OF-STOCK RATE

| PRODUCT | ALLOWABLE VALUE | CALCULATION VALUE |
|---|---|---|
| PRODUCT A | 5% | 4.1% |
| PRODUCT B | 3% | 2.7% |
| PRODUCT C | 5% | 3.3% |

## INTERNATIONAL SEARCH REPORT

| | International application No. |
|---|---|
| | PCT/JP2010/003917 |

A. CLASSIFICATION OF SUBJECT MATTER
*G05B19/418*(2006.01)i, *G06Q50/00*(2006.01)i

According to International Patent Classification (IPC) or to both national classification and IPC

B. FIELDS SEARCHED

Minimum documentation searched (classification system followed by classification symbols)
G05B19/418, G06Q50/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-146344 A (Kanazawa Institute of Technology), 26 June 2008 (26.06.2008), claims 1, 3 (Family: none) | 1-16 |
| A | JP 06-056223 A (Toyoda Automatic Loom Works, Ltd.), 01 March 1994 (01.03.1994), paragraph [0022] (Family: none) | 1-16 |
| A | JP 11-039410 A (Sumitomo Metal Industries, Ltd.), 12 February 1999 (12.02.1999), paragraph [0004] (Family: none) | 1-16 |

☒ Further documents are listed in the continuation of Box C.　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 02 July, 2010 (02.07.10) | 13 July, 2010 (13.07.10) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2010/003917 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2006-171856 A  (Hitachi, Ltd.), 29 June 2006 (29.06.2006), paragraph [0004] (Family: none) | 1-16 |
| A | JP 06-149777 A  (Sekisui Chemical Co., Ltd.), 31 May 1994 (31.05.1994), entire text; all drawings (Family: none) | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005309770 A
- JP 2007128225 A